# EUROPÄISCHE PATENTSCHRIFT

(11) **EP 4 196 701 B1**
(45) Veröffentlichungstag und Bekanntmachung des Hinweises auf die Patenterteilung: **03.01.2024**
(21) Anmeldenummer: 21743478.6
(22) Anmeldetag: 13.07.2021
(51) Int. Cl.: F16H 63/34, F16H 61/02

(54) **ANTRIEBSEINRICHTUNG FÜR EIN KRAFTFAHRZEUG SOWIE KRAFTFAHRZEUG**
DRIVE DEVICE FOR A MOTOR VEHICLE, AND MOTOR VEHICLE
DISPOSITIF D'ENTRAÎNEMENT POUR UN VÉHICULE AUTOMOBILE, ET VÉHICULE AUTOMOBILE

(30) Priorität: 14.08.2020 DE 102020004976
(43) Veröffentlichungstag der Anmeldung: 21.06.2023
(73) Patentinhaber: Mercedes-Benz Group AG, 70372 Stuttgart (DE)
(72) Erfinder: BARAGA, Michael, 70327 Stuttgart (DE); KALCZYNSKI, Henrik, 70374 Stuttgart (DE); BRANDENBURG, Markus, 73730 Esslingen (DE); KRONIMUS, Nico, 70182 Stuttgart (DE)
(74) Vertreter: Novagraaf Group
(86) Internationale Anmeldenummer: PCT/EP2021/069399
(87) Internationale Veröffentlichungsnummer: WO 2022/033786

(56) Entgegenhaltungen:
- WO-A1-2018/055204
- DE-A1-102018 112 665

## Beschreibung

Die Erfindung betrifft eine Antriebseinrichtung für ein Kraftfahrzeug, insbesondere für einen Kraftwagen, gemäß dem Oberbegriff von Patentanspruch 1. Des Weiteren betrifft die Erfindung ein Kraftfahrzeug, insbesondere einen Kraftwagen.

Der DE 10 2009 026 709 A1 ist eine Anordnung als bekannt zu entnehmen, mit zumindest einem in einem Gehäuse eines Getriebes angeordneten Schaltelement, welches sowohl zum Koppeln mit als auch zum Entkoppeln von wenigstens einem Bauteil des Getriebes hydraulisch mit Druckmittel einer Druckmittelversorgung beaufschlagbar ist. Eine Antriebseinrichtung für ein Kraftfahrzeug, mit mindestens einer elektrischen Maschine , mit einem Getriebe und mit einem hydraulischen Kreislauf ist aus der WO 2018/055204 A1 bekannt.

Aufgabe der vorliegenden Erfindung ist es, eine Antriebseinrichtung für ein Kraftfahrzeug sowie ein Kraftfahrzeug mit einer solchen Antriebseinrichtung zu schaffen, sodass ein besonders vorteilhafter Betrieb der Antriebseinrichtung realisierbar ist.

Diese Aufgabe wird durch eine Antriebseinrichtung mit den Merkmalen des Patentanspruchs 1 sowie durch ein Kraftfahrzeug mit den Merkmalen des Patentanspruchs 9 gelöst. Vorteilhafte Ausgestaltungen mit zweckmäßigen Weiterbildungen der Erfindung sind in den übrigen Ansprüchen angegeben.

Ein erster Aspekt der Erfindung betrifft eine Antriebseinrichtung für ein vorzugsweise als Kraftwagen, insbesondere als Personenkraftwagen, ausgebildetes Kraftfahrzeug. Dies bedeutet, dass das Kraftfahrzeug in seinem vollständig hergestellten Zustand die Antriebseinrichtung umfasst und mittels der Antriebseinrichtung, insbesondere elektrisch und ganz insbesondere rein elektrisch antreibbar ist. Mit anderen Worten ist es vorzugsweise vorgesehen, dass die Antriebseinrichtung ein elektrischer Antriebsstrang ist, mittels welchem das Kraftfahrzeug, insbesondere rein, elektrisch angetrieben werden kann. Somit ist es vorzugsweise vorgesehen, dass das Kraftfahrzeug als ein Elektrofahrzeug, insbesondere als ein batterieelektrisches Fahrzeug (BEV), ausgebildet ist. Die Antriebseinrichtung umfasst mindestens eine elektrische Maschine sowie ein Getriebe, über welches das Kraftfahrzeug mittels der elektrischen Maschine elektrisch, insbesondere rein elektrisch, angetrieben werden kann. Um besonders große elektrische Leistungen zum, insbesondere rein, elektrischen Antreiben des Kraftfahrzeugs zu realisieren, ist es vorzugsweise vorgesehen, dass die elektrische Maschine als eine Hochvolt-Komponente ausgebildet ist, deren elektrische Spannung, insbesondere elektrische Betriebs- oder Nennspannung, vorzugsweise mindestens 48 Volt, insbesondere mindestens 50 Volt und ganz insbesondere mindestens 60 Volt, beträgt. Vorzugsweise beträgt die elektrische Spannung, insbesondere die elektrische Betriebs- oder Nennspannung, der elektrischen Maschine mehrere hundert Volt. Um das Kraftfahrzeug mittels der elektrischen Maschine elektrisch anzutreiben, wird die elektrische Maschine beispielsweise in einem Motorbetrieb und somit als Elektromotor betrieben. Hierzu wird die elektrische Maschine mit elektrischer Energie beziehungsweise elektrischem Strom versorgt, die beziehungsweise der beispielsweise von einem beispielsweise als Batterie und ganz insbesondere als Hochvolt-Batterie (HV-Batterie) ausgebildeten Energiespeicher des Kraftfahrzeugs bereitgestellt wird. Dies bedeutet, dass der Gang eingelegt und ausgelegt werden kann. Ist der Gang eingelegt, so ist das Kraftfahrzeug über das Getriebe und dabei über den eingelegten Gang mittels der elektrischen Maschine antreibbar. Ist der Gang ausgelegt, so kann das Kraftfahrzeug nicht über den Gang von der elektrischen Maschine angetrieben werden. Die Antriebseinrichtung, insbesondere das Getriebe, weist dabei wenigstens ein Schaltelement auf, mittels welchem durch Betätigen des Schaltelements der Gang des Getriebes zu schalten ist. Dies bedeutet, dass durch Betätigen des Schaltelements der Gang eingelegt und/oder ausgelegt werden kann. Um das Schaltelement zu betätigen, wird das Schaltelement mit einem vorzugsweise flüssigen Medium versorgt beziehungsweise beaufschlagt, wie im Folgenden noch näher erläutert wird.

Die Antriebseinrichtung weist außerdem wenigstens einen Kreislauf auf, welcher von dem Medium durchströmbar ist. Das Medium ist vorzugsweise eine Flüssigkeit, insbesondere ein Öl, sodass das Medium auch als Hydraulikmedium bezeichnet wird. Somit kann der Kreislauf auch als Hydraulikkreis oder Hydraulikkreislauf bezeichnet werden. Der Kreislauf weist einen ersten Zweig und einen zweiten Zweig auf, welcher vorzugsweise zumindest teilweise von dem ersten Zweig insbesondere räumlich und/oder fluidisch getrennt ist. Zum Kühlen und/oder Schmieren der elektrischen Maschine und/oder des Getriebes ist der erste Zweig von dem Medium durchströmbar. Mit anderen Worten kann die elektrische Maschine und/oder das Getriebe mittels des Mediums und mittels des ersten Zweigs gekühlt und/oder geschmiert werden, insbesondere indem wenigstens ein Teil des Getriebes und/oder der elektrischen Maschine über den ersten Zweig mit dem Medium versorgt wird beziehungsweise versorgbar ist. Im Hinblick auf das Kühlen und/oder Schmieren der elektrischen Maschine beziehungsweise des Getriebes wird das Medium somit als Kühl- und/oder Schmiermedium verwendet, insbesondere derart, dass die elektrische Maschine beziehungsweise das Getriebe über den ersten Zweig mit dem Medium versorgbar ist beziehungsweise versorgt wird, um dadurch die elektrische Maschine beziehungsweise das Getriebe mittels des Mediums zu kühlen und/oder zu schmieren. Zum Betätigen des Schaltelements ist der zweite Zweig von dem Medium durchströmbar. Dies bedeutet, dass das Medium im Hinblick auf den zweiten Zweig und das Schaltelement als Betätigungsmedium verwendet wird, um mittels des Betätigungsmediums das Schaltelement zu betätigen und in der Folge den Gang zu schalten. Hierzu wird beziehungsweise ist das Schaltelement über den zweiten Zweig mit dem Medium versorgbar beziehungsweise versorgt. Insbesondere kann das Schaltelement derart mittels des Mediums betätigt werden, dass das Schaltelement über den zweiten Zweig mit dem Medium versorgt und dadurch insbesondere mit dem Medium beaufschlagt wird. Durch Beaufschlagen des Schaltelements mit dem Medium kann beispielsweise ein Schaltteil des Schaltelements, insbesondere translatorisch und/oder relativ zu einem Gehäuse des Getriebes, bewegt werden, um dadurch den Gang zu schalten beziehungsweise eine Schaltung des Gangs zu bewirken.

Die Antriebseinrichtung umfasst außerdem wenigstens eine elektrische Pumpe zum Fördern des Mediums durch den Kreislauf. Mit anderen Worten ist die elektrische Pumpe elektrisch betreibbar. Durch elektrisches Betreiben der Pumpe wird mittels der Pumpe das Medium gefördert, wobei mittels der Pumpe das Medium durch den Kreislauf und somit durch die Zweige hindurchgefördert werden kann. Die elektrische Pumpe umfasst beispielsweise ein Förderelement, welches insbesondere in einem Pumpengehäuse aufgenommen und relativ zu dem Pumpengehäuse bewegbar, insbesondere drehbar, ist. Außerdem umfasst die elektrische Pumpe beispielsweise einen Elektromotor, welcher mittels elektrischer Energie beziehungsweise elektrischem Strom betreibbar ist. Durch Betreiben der elektrischen Maschine kann der Elektromotor das Förderelement antreiben und dadurch relativ zu dem Pumpengehäuse bewegen, wodurch mittels des Förderelements das Medium gefördert wird beziehungsweise zu fördern ist.

Um nun einen besonders vorteilhaften Betrieb der Antriebseinrichtung zu realisieren, weist die Antriebseinrichtung eine insbesondere zusätzlich zu dem Schaltelement vorgesehene Parksperre auf. Die Parksperre weist eine solche, hinlänglich bekannte Funktion auf, dass mittels der Parksperre das Kraftfahrzeug insbesondere dann gegen ein unerwünschtes Wegrollen gesichert werden kann, wenn das Kraftfahrzeug an beziehungsweise auf einem Gefälle geparkt ist. Das Kraftfahrzeug weist beispielsweise wenigstens zwei auch als Fahrzeugräder bezeichnete Räder auf, die über das Getriebe von der elektrischen Maschine elektrisch angetrieben werden können, um dadurch das Kraftfahrzeug elektrisch anzutreiben. Dabei sind die Fahrzeugräder Bodenkontaktelemente, über die das Kraftfahrzeug in Fahrzeughochrichtung nach unten an einem Boden abstützbar oder abgestützt ist. Wird das Kraftfahrzeug entlang des Bodens gefahren, während das Kraftfahrzeug in Fahrzeughochrichtung nach unten hin über die Bodenkontaktelemente an dem Boden abgestützt ist, so rollen die Fahrzeugräder an dem Boden ab. Dabei weist beispielsweise das Getriebe eine Getriebeausgangswelle auf, über welche das Getriebe ein Antriebsdrehmoment bereitstellen kann. Das Antriebsdrehmoment resultiert beispielsweise aus einem Drehmoment, welches zum Antreiben des Kraftfahrzeugs von der elektrischen Maschine bereitgestellt wird. Die Parksperre kann nun beispielsweise zwischen einem Sperrzustand und einem Freigabezustand umgeschaltet werden. In dem Sperrzustand ist die Getriebeausgangswelle mittels der Parksperre gegen eine relativ zu dem Gehäuse des Getriebes erfolgende Drehung gesichert, wodurch auch die insbesondere zur permanenten Drehmomentübertragung mit der Getriebeausgangswelle verbundenen Fahrzeugräder gegen eine relativ zu dem Gehäuse des Getriebes erfolgende Drehung gesichert sind. Dadurch kann das Kraftfahrzeug gegen ein unerwünschtes Wegrollen gesichert werden. In dem Freigabezustand gibt die Parksperre die Getriebeausgangswelle und die Räder für eine jeweilige, relativ zu dem Gehäuse des Getriebes erfolgende Drehung frei, sodass in dem Freigabezustand die Getriebeausgangswelle und somit das Kraftfahrzeug von der elektrischen Maschine angetrieben werden kann. Hierdurch wird die Getriebeausgangswelle relativ zu dem Gehäuse gedreht. Insbesondere ist in dem Sperrzustand die Getriebeausgangswelle mittels der Parksperre formschlüssig gegen eine relativ zu dem Gehäuse erfolgende Drehung gesichert.

Des Weiteren weist der Kreislauf einen dritten Zweig auf, welcher zum Betätigen der Parksperre von dem Medium durchströmbar ist. Dies bedeutet, dass das Medium mittels der Pumpe durch den Kreislauf und somit auch durch den dritten Zweig hindurchgefördert werden kann. Durch Fördern des Mediums durch den dritten Zweig wird die Parksperre mit dem Medium versorgt und dadurch mittels des Mediums betätigt, wobei durch Betätigen der Parksperre die Parksperre aus dem Sperrzustand in den Freigabezustand und/oder aus dem Freigabezustand in den Sperrzustand umschaltbar ist. Erfindungsgemäß ist es somit vorgesehen, wenigstens drei Funktionen mittels der einen Pumpe und mittels des einen Kreislaufs zu realisieren. Eine erste der Funktionen ist das Kühlen und/oder Schmieren der elektrischen Maschine und/oder des Getriebes über den ersten Zweig, indem der erste Zweig mittels der Pumpe mit dem Medium versorgt wird beziehungsweise in dem mittels der Pumpe das Medium durch den ersten Zweig hindurchgefördert wird. Eine zweite der Funktionen ist das Betätigen des Schaltelements, indem mittels der Pumpe der zweite Zweig mit dem Medium versorgt wird beziehungsweise indem mittels der Pumpe das Medium durch den zweiten Zweig hindurchgefördert wird. Die dritte Funktion ist das Betätigen der Parksperre, indem mittels der Pumpe der dritte Zweig mit dem Medium versorgt wird, beziehungsweise indem mittels der Pumpe das Medium durch den dritten Zweig hindurchgefördert wird.

Das Schaltelement ist beispielsweise zwischen einem Koppelzustand und einem Entkoppelzustand umschaltbar. Beispielsweise ist das Schaltteil des Schaltelements, insbesondere translatorisch und/oder relativ zu dem Gehäuse, zwischen einer den Koppelzustand bewirkenden Koppelstellung und einer den Entkoppelzustand bewirkenden Entkoppelstellung bewegbar, insbesondere durch Betätigen des Schaltelements. In dem Koppelzustand sind beispielsweise wenigstens zwei Bauteile des Getriebes mittels des Schaltelements, insbesondere formschlüssig, drehfest miteinander verbunden, sodass insbesondere dann, wenn das Getriebe mittels der elektrischen Maschine angetrieben wird, sich die mittels des Schaltelements drehfest miteinander verbundenen Bauteile gemeinsam beziehungsweise gleichzeitig und mit der gleichen Winkelgeschwindigkeit um eine gemeinsame Drehachse relativ zu dem Gehäuse drehen. In dem Entkoppelzustand gibt das Schaltelement die Bauteile für eine um die Drehachse relativ zueinander erfolgende Drehung frei, sodass in dem Entkoppelzustand sich die Bauteile insbesondere dann relativ zueinander drehen oder drehen können, wenn das Getriebe angetrieben wird. Vorzugsweise ist das Schaltelement als selbsthaltendes Schaltelement ausgebildet, welches sich selbstständig beziehungsweise selbsttätig in dem Entkoppelzustand und/oder in dem Koppelzustand hält. Ferner ist es vorzugsweise vorgesehen, dass die Parksperre als eine selbsthaltende Parksperre ausgebildet ist, welche sich selbstständig beziehungsweise selbsttätig in dem Sperrzustand und/oder in dem Freigabezustand hält. Die Erfindung basiert insbesondere auf der Erkenntnis, dass für das Betätigen des Schaltelements, für das Betätigen der Parksperre und für das Kühlen und/oder Schmieren der elektrischen Maschine und/oder des Getriebes ähnliche oder gleiche Anforderungen im Hinblick auf eine Förderung des Mediums bestehen, sodass diese Anforderungen mittels der selben Pumpe erfüllt werden können. Im Hinblick auf das Kühlen und/oder Schmieren der elektrischen Maschine und/oder des Getriebes fördert die Pumpe das Medium und bewirkt somit einen Volumen- oder Massenstrom des Mediums, wobei der Volumen- beziehungsweise Massenstrom zum Kühlen und/oder Schmieren der elektrischen Maschine und des Getriebes genutzt wird. Somit wird der Volumen- beziehungsweise Massenstrom auch als Kühl- und/oder Schmiervolumenstrom beziehungsweise auch als Kühl- und/oder Schmiermassenstrom bezeichnet. Dabei sind zum Betätigen des Schaltelements, zum Betätigen der Parksperre und zum Kühlen und/oder Schmieren des Getriebes und/oder der elektrischen Maschine hohe Volumenströme auf vergleichsweise niedrigem Druckniveau von beispielsweise 5 bar vorteilhaft. Solch hohe Volumenströme bei vergleichsweise niedrigem Druckniveau kann die Pumpe bereitstellen beziehungsweise können mittels der Pumpe bewirkt werden. Mit anderen Worten kann die Pumpe hohe Volumenströme des Mediums auf geringem Druckniveau bereitstellen und durch die Zweige hindurchfördern, sodass das Kühlen und/oder Schmieren der elektrischen Maschine und/oder des Getriebes, das Betätigen des Schaltelements und das Betätigen der Parksperre mit einer besonders geringen Teileanzahl und somit auf bauraum-, gewichts- und kostengünstige Weise realisiert werden können. Außerdem sind im Hinblick auf Ausgestaltungen von Dichtflächen nur geringe Dichtigkeitsanforderungen ausreichend, beispielsweise im Hinblick auf einen Einbau der Pumpe im Gehäuse, sodass die zuvor beschriebenen drei Funktionen auf besonders einfache und kostengünstige Weise dargestellt werden können. Außerdem kann ein zusätzlicher, separater Druckregelschieber zur Regelung beziehungsweise Einstellung eines Drucks in dem auch als Hydraulikkreis bezeichneten Kreislaufs im Vergleich zu herkömmlichen Lösungen entfallen, sodass die Teileanzahl und somit das Gewicht, die Kosten und der Bauraumbedarf in einem besonders geringen Rahmen gehalten werden können. Darüber hinaus kann die technische Komplexität der Antriebseinrichtung gering gehalten werden und eine besonders hohe Robustheit und ein besonders energieeffizienter Betrieb können dargestellt werden.

Bei einer besonders vorteilhaften Ausführungsform der Erfindung umfasst die Antriebseinrichtung ein Ventilelement, über welches, insbesondere wahlweise, der erste Zweig und der zweite Zweig mit dem mittels der Pumpe geförderten Medium versorgbar sind. Das Ventilelement ist zwischen einem Kühlzustand und einem Betätigungszustand umschaltbar. Der Kühlzustand ist ein erster Schaltzustand oder wird auch als erster Schaltzustand des Ventilelements bezeichnet, und der Betätigungszustand ist ein zweiter Schaltzustand oder wird auch als zweiter Schaltzustand des Ventilelements bezeichnet. Vorzugsweise ist das Ventilelement als elektrisch schaltbares Ventilelement ausgebildet, sodass das Ventilelement vorzugsweise dadurch zumindest aus einem der Schaltzustände in den anderen Schaltzustand und/oder aus dem anderen Schaltzustand in den einen Schaltzustand umschaltbar ist, dass das Ventilelement mit elektrischer Energie beziehungsweise mit elektrischem Strom versorgt wird. In dem Kühlzustand ist der erste Zweig über das Ventilelement fluidisch mit der Pumpe verbunden und dadurch über das Ventilelement mit dem mittels der Pumpe geförderten Medium versorgbar, während der zweite Zweig mittels des Ventilelements fluidisch von der Pumpe getrennt ist. Befindet sich somit beispielsweise das Ventilelement in dem Kühlzustand, während mittels der Pumpe das Medium gefördert wird, so wird das Medium über das Ventilelement in den ersten Zweig und durch den ersten Zweig hindurch gefördert, sodass in dem Kühlzustand die elektrische Maschine und/oder das Getriebe mit dem Medium versorgt und dadurch mittels des Mediums gekühlt und/oder geschmiert wird. Dabei unterbleibt jedoch eine Versorgung des zweiten Zweigs und somit des Schaltelements mit dem mittels der Pumpe geförderten Medium, sodass insbesondere ein Betätigen des Schaltelements unterbleibt. In dem Betätigungszustand jedoch ist der zweite Zweig über das Ventilelement fluidisch mit der Pumpe verbunden, wodurch der zweite Zweig und somit das Schaltelement über das Ventilelement mit dem mittels der Pumpe geförderten Medium versorgbar sind, während der erste Zweig mittels des Ventilelements fluidisch von der Pumpe getrennt ist. Um somit beispielsweise das Schaltelement zu schalten, wird das Ventilelement in dem Betätigungszustand geschaltet. Wird dann mittels der Pumpe das Medium gefördert, so wird das Medium mittels der Pumpe über das Ventilelement zu dem zweiten Zweig und somit insbesondere zu dem Schaltelement gefördert, wodurch das Schaltelement betätigt wird. Dabei unterbleibt jedoch ein mittels der Pumpe bewirktes Fördern des Mediums durch den ersten Zweig hindurch. Hierdurch kann auf besonders einfache Weise eine bedarfsgerechte Versorgung des Schaltelements (zweiter Zweig) und des ersten Zweigs mit dem Medium realisiert werden. Somit ist das Ventilelement vorzugsweise ein elektro-hydraulisches Ventilelement.

Um die Parksperre besonders einfach und besonders energieeffizient betätigen zu können, ist es in weiterer Ausgestaltung der Erfindung vorgesehen, dass zum Betätigen der Parksperre das Ventilelement in den Betätigungszustand geschaltet ist. Diese Ausführungsform basiert insbesondere auf der Erkenntnis, dass während einer Zeitdauer, während die Parksperre mittels des Mediums betätigt ist beziehungsweise zu betätigen ist, die Kühlung beziehungsweise Schmierung, das heißt ein durch die Pumpe bewirktes Fördern des Mediums durch den ersten Zweig hindurch ohne Nachteile einfach deaktiviert werden beziehungsweise unterbleiben kann. Hierdurch kann auf besonders einfache und energieeffiziente Weise die Parksperre betätigt werden.

Eine weitere Ausführungsform der Erfindung zeichnet sich dadurch aus, dass in dem zweiten Zweig ein insbesondere zusätzlich zu dem Ventilelement vorgesehenes, zweites Ventilelement angeordnet ist. Das zweite Ventilelement ist somit in Strömungsrichtung des von dem ersten Ventilelement zu dem Schaltelement strömenden Mediums stromab des ersten Ventilelements und insbesondere stromauf des Schaltelements angeordnet. Das zweite Ventilelement ist zwischen einem Einlegezustand und einem Auslegezustand umschaltbar. Der Einlegezustand wird auch als erster Zustand bezeichnet beziehungsweise der Einlegezustand ist ein erster Zustand des zweiten Ventilelements, wobei der Auslegezustand ein zweiter Zustand ist beziehungsweise auch als zweiter Zustand des zweiten Ventilelements bezeichnet wird. Vorzugsweise ist das zweite Ventilelement als elektrisches Ventilelement beziehungsweise als elektrisch schaltbares Ventilelement ausgebildet, welches dadurch von einem der Zustände in den anderen Zustand und/oder von dem anderen Zustand in den einen Zustand umschaltbar ist, dass das zweite Ventilelement mit elektrischer Energie beziehungsweise elektrischem Strom versorgbar ist beziehungsweise versorgt wird. Somit kann vorzugsweise das zweite Ventilelement ein elektro-hydraulisches Ventilelement sein. In dem Einlegezustand ist das Schaltelement über das zweite Ventilelement fluidisch mit dem ersten Ventilelement verbunden, wodurch, insbesondere während sich das erste Ventilelement in dem Betätigungszustand befindet, das Schaltelement über die Ventilelemente mit dem mittels der Pumpe geförderten Medium versorgbar ist, wodurch zum Einlegen des Gangs das Schaltelement betätigbar ist. Mit anderen Worten, um den Gang einzulegen und um insbesondere das Schaltteil in eine erste Richtung und dabei aus der Entkoppelstellung in die Koppelstellung zu bewegen, wird beziehungsweise ist das zweite Ventilelement in den Einlegezustand und das erste Ventilelement in den Betätigungszustand geschaltet.

In dem Auslegezustand ist das Schaltelement über das zweite Ventilelement fluidisch mit dem ersten Ventilelement verbunden, wodurch, insbesondere während sich das erste Ventilelement in dem Betätigungszustand befindet, das Schaltelement über die Ventilelemente mit dem mittels der Pumpe geförderten Medium versorgbar ist, wodurch zum Auslegen des Gangs das Schaltelement betätigbar ist. Mit anderen Worten, um den Gang auszulegen und somit insbesondere um das Schaltteil in eine der ersten Richtung entgegengesetzte, zweite Richtung zu bewegen, ist beziehungsweise wird das zweite Ventilelement in den Auslegezustand und das erste Ventilelement in den Betätigungszustand geschaltet. Einerseits kann hierdurch ein bedarfsgerechtes Betätigen des Schaltelements auf besonders einfache, bauraum-, gewichts- und kostengünstige Weise realisiert werden, um dadurch den Gang bedarfsgerecht schalten, mithin einlegen und auslegen zu können. Andererseits kann durch einfaches Schalten der Ventilelemente der dritte Zweig bedarfsgerecht mit dem mittels der Pumpe geförderten Medium versorgt werden. Mit anderen Worten kann durch einfaches Schalten der Ventilelemente ein bedarfsgerechtes Betätigen der Parksperre realisiert werden. Beispielsweise ist das erste Ventilelement über ein Leitungselement mit dem mittels der Pumpe geförderten Medium versorgbar. Hierzu ist beispielsweise das Leitungselement an sich einerseits, insbesondere einen Ends, fluidisch mit der Pumpe und andererseits, insbesondere anderen Ends, fluidisch mit dem ersten Ventilelement verbunden. Dabei ist vorzugsweise ein zweites Leitungselement vorgesehen, welches insbesondere an einer stromab der Pumpe und stromauf des ersten Ventilelements angeordneten Abzweigstelle von dem ersten Leitungselement abzweigt, wobei die Parksperre über das zweite Leitungselement mit dem mittels der Pumpe geförderten Medium versorgbar ist. Insbesondere ist es denkbar, dass das zweite Leitungselement ein Bestandteil des dritten Zweigs ist oder den dritten Zweig bildet, sodass beispielsweise der dritte Zweig an der Abzweigstelle von dem ersten Leitungselement abzweigt.

Beispielsweise kann die Parksperre somit dadurch auf besonders einfache Weise mit dem mittels der Pumpe geförderten Medium versorgt werden, dass sich das erste Ventilelement in dem Betätigungszustand befindet, während sich das zweite Ventilelement in einem der Zustände befindet, wobei in dem einen Zustand, in welchem sich das zweite Ventilelement befindet, trotz eines mittels der Pumpe bewirkten Förderns des Mediums ein Betätigen des Schaltelements, das heißt ein Bewegen des Schaltteils unterbleibt. Da somit der erste Zweig von der Pumpe fluidisch getrennt ist und sich das Schaltelement bereits in einem Zustand oder einer Stellung befindet, der beziehungsweise die durch den einen Zustand des zweiten Ventilelements bewirkbar ist, sodass das Schaltelement trotz Fördern des Mediums mittels der Pumpe nicht betätigt beziehungsweise nicht bewegt wird, strömt das mittels der Pumpe geförderte Medium zu dem und in den dritten Zweig und somit über den dritten Zweig zu der Parksperre, wodurch die Parksperre betätigt wird. Wieder mit anderen Worten ausgedrückt, kann sich in den fluidisch mit der Pumpe verbundenen Zweigen, bei denen es sich um den dritten Zweig und um den zweiten Zweig handelt, ein hinreichender, auch als Systemdruck bezeichneter Druck aufbauen, mit welchem die Parksperre beaufschlagt werden kann, um die Parksperre zu betätigen beziehungsweise zu bewegen. Dabei kann es unerheblich sein, ob sich das beispielsweise als Klaue beziehungsweise Klauenkupplung ausgebildete Schaltelement in dem Koppelzustand oder in dem Entkoppelzustand befindet, mithin eingelegt oder ausgelegt ist, mit anderen Worten kann es unerheblich sein, ob der Gang des Getriebes eingelegt oder ausgelegt ist, wenn das Kraftfahrzeug stillsteht und die Parksperre sich in dem Sperrzustand befindet. Vorteilhaft ist dabei jedoch, wenn das zweite Ventilelement während des Betätigens der Parksperre unverändert in seinem eingestellten Zustand verbleibt, in dem das zweite Ventilelement vor dem Betätigen beziehungsweise vor einer Anforderung des Betätigens der Parksperre war, sodass das beispielsweise als Kolben ausgebildete Schaltteil des Schaltelements nicht bewegt wird, obwohl das Schaltelement über die Ventilelemente fluidisch mit der Pumpe verbunden ist und mittels der Pumpe das Medium befördert wird. Hierdurch können ein hinreichender Volumenstrom und ein hinreichender Druck zum Betätigen der Parksperre mittels der Pumpe aufgebaut werden, wobei sich der Druck des Mediums an dem Schaltteil abstützt und insbesondere dadurch besonders schnell aufgebaut werden kann, dass ein Bewegen des Schaltteils unterbleibt. Hintergrund dieser Ausführungsform ist auch, dass Schaltvorgänge des Schaltelements und der Parksperre üblicherweise nicht gleichzeitig stattfinden, sodass diese beiden Funktionen nie gleichzeitig den Bedarf haben, mit dem beispielsweise als Öl ausgebildeten Medium versorgt zu werden. Dies gilt insbesondere für alle drei Funktionen. Diese Ausführungsform ermöglicht es auch, die drei Funktionen ohne dritten Sperrzustand des ersten Ventilelements zu realisieren, wobei die Realisierung eines solchen dritten Schaltzustands technisch besonders aufwändig wäre. Dadurch kann die Antriebseinrichtung auf besonders einfache und kostengünstige Weise bedarfsgerecht und energieeffizient betrieben werden.

Eine weitere Ausführungsform zeichnet sich dadurch aus, dass das Schaltelement ein formschlüssiges Schaltelement, insbesondere eine Klaue beziehungsweise eine Klauenkupplung, ist. Es wurde gefunden, dass sich insbesondere die Betätigung eines formschlüssigen Schaltelements besonders gut kombinieren lässt mit dem Betätigen der Parksperre und mit dem Kühlen und/oder Schmieren, da diese drei Funktionen ähnliche oder zumindest im Wesentlichen gleiche Anforderungen im Hinblick auf ein mittels einer Pumpe zu bewirkendes Befördern des Mediums haben.

Um die Antriebseinrichtung auf besonders einfache und kostengünstige Weise bedarfsgerecht betreiben zu können, ist es erfindungsgmäß vorgesehen, dass die Pumpe in einem Vorwärtsbetrieb und in einem Rückwärtsbetrieb betreibbar ist. Unter dem Vorwärtsbetrieb ist insbesondere zu verstehen, dass in dem Ventilelement das Förderelement mittels des Elektromotors derart angetrieben wird, dass das Förderelement relativ zu dem Pumpengehäuse in eine erste Bewegungsrichtung bewegt wird. Unter dem Rückwärtsbetrieb ist insbesondere zu verstehen, dass in dem Rückwärtsbetrieb das Förderelement mittels des Elektromotors derart angetrieben wird, dass das Förderelement in eine der ersten Bewegungsrichtung entgegengesetzte, zweite Bewegungsrichtung relativ zu dem Pumpengehäuse bewegt wird. Der Vorwärtsbetrieb ist zum Fördern des Mediums von der Pumpe hin zu dem jeweiligen Zweig vorgesehen. Somit wird beispielsweise die Pumpe in dem Vorwärtsbetrieb betrieben, um mittels der Pumpe das Medium von der Pumpe hin zu dem jeweiligen Zweig zu fördern. In dem Vorwärtsbetrieb strömt das mittels der Pumpe in dem Vorwärtsbetrieb geförderte Medium von einem ersten Anschluss der Pumpe zu einem zweiten Anschluss der Pumpe. Beispielsweise ist das zuvor genannte, erste Leitungselement fluidisch mit dem zweiten Anschluss verbunden.

Der Rückwärtsbetrieb ist vorgesehen, um mittels der Pumpe das Medium aus zumindest einem Teil des dritten Zweigs, insbesondere zumindest aus einem Teil des zweiten Leitungselements, herauszufördern. In dem Rückwärtsbetrieb strömt das mittels der Pumpe in dem Rückwärtsbetrieb geförderte Medium, insbesondere aus dem dritten Zweig und ganz insbesondere aus dem zweiten Leitungselement, von dem zweiten Anschluss zu dem ersten Anschluss der Pumpe, wodurch das Medium zumindest aus einem Teil des dritten Zweigs herausförderbar ist beziehungsweise herausgefördert wird. Insbesondere kann beispielsweise durch den Rückwärtsbetrieb die Parksperre besonders vorteilhaft betätigt, insbesondere ausgelegt werden. Unter dem Auslegen der Parksperre ist zu verstehen, dass die Parksperre von dem einen Sperrzustand in den Freigabezustand geschaltet wird. Das Schalten der Parksperre aus dem Freigabezustand in den Sperrzustand wird auch als Einlegen der Parksperre bezeichnet.

Um auf besonders einfache und energieeffiziente Weise einen besonders vorteilhaften Betrieb der Antriebseinrichtung zu realisieren, ist es in weiterer Ausgestaltung der Erfindung vorgesehen, dass das Getriebe wenigstens ein zusätzlich zu dem Schaltelement vorgesehenes, zweites Schaltelement aufweist. Ferner ist es denkbar, dass das Getriebe einen zusätzlich zu dem Gang vorgesehen, zweiten Gang aufweist. Der zweite Gang ist vorzugsweise schaltbar, das heißt einlegbar und auslegbar. Beispielsweise ist der zweite Gang durch Betätigen des zweiten Schaltelements schaltbar. Somit kann beispielsweise durch Betätigen des zweiten Schaltelements der zweite Gang eingelegt und/oder ausgelegt werden.

Des Weiteren weist die Antriebseinrichtung vorzugsweise einen zweiten Kreislauf auf, welcher zum Betätigen des zweiten Schaltelements von dem Medium durchströmbar ist. Mit anderen Worten, um das zweite Schaltelement zu betätigen, wird das Medium durch den zweiten Kreislauf hindurchgefördert. Hierzu umfasst die Antriebseinrichtung eine zweite elektrische Pumpe, mittels welcher das Medium durch den zweiten Kreislauf hindurchgefördert werden kann. Die vorherigen und folgenden Ausführungen zur ersten Pumpe können ohne weiteres auch auf die zweite Pumpe übertragen werden und umgekehrt.

Dabei hat es sich als besonders vorteilhaft gezeigt, wenn das zweite Schaltelement ein reibschlüssiges Schaltelement, insbesondere eine Bremse, ist. Beispielsweise kann das zweite Schaltelement eine Lamellenkupplung beziehungsweise eine Lamellenbremse sein.

Diese Ausführungsform beruht auf der Erkenntnis, dass reibschlüssige Schaltelemente gegenüber formschlüssigen Schaltelementen einen höheren Druck und einen geringeren Volumenstrom des Mediums brauchen, um mittels des Mediums das reibschlüssige Schaltelement zu schalten, insbesondere zu schließen und/oder geschlossen zu halten. Dadurch, dass die Antriebseinrichtung vorzugsweise den ersten Kreislauf und den zweiten Kreislauf aufweist, können zwei Betätigungsfunktionen auf die Kreisläufe aufgeteilt werden. Eine erste der Betätigungsfunktionen umfasst das Betätigen des ersten Schaltelements, das Betätigen der Parksperre und das Versorgen des ersten Zweigs mit dem Medium, um dadurch die elektrische Maschine und/oder das Getriebe zu schmieren und/oder zu kühlen. Die zweite Betätigungsfunktion umfasst das Betätigen des zweiten Schaltelements. Die erste Betätigungsfunktion kann realisiert werden, indem mittels der ersten Pumpe ein erster, hoher Volumenstrom des Mediums mit einem ersten, geringen Druck bereitgestellt beziehungsweise erzeugt wird. Die zweite Betätigungsfunktion kann realisiert werden, indem mittels der zweiten Pumpe ein zweiter, gegenüber dem ersten Volumenstrom geringerer Volumenstrom des Mediums mit einem gegenüber dem ersten Druck höheren, zweiten Druck realisiert beziehungsweise bereitgestellt wird. Ferner kann dadurch realisiert werden, dass die zweite Pumpe nur dann betrieben wird beziehungsweise dass mittels der zweiten Pumpe nur dann das Medium durch den zweiten Kreislauf hindurchgefördert wird, wenn das zweite Schaltelement geschaltet beziehungsweise eingelegt oder geschlossen gehalten wird. Dadurch wird ein besonders energieeffizienter Betrieb gewährleistet werden.

Um schließlich die Kosten, den Bauraumbedarf und das Gewicht besonders gering halten und somit einen besonders vorteilhaften Betrieb der Antriebseinrichtung realisieren zu können, ist es in weiterer Ausgestaltung der Erfindung vorgesehen, dass die Antriebseinrichtung einen den Pumpen und den Kreisläufen gemeinsamen Sumpf aufweist, aus welchem das Medium mittels der Pumpen durch die Kreisläufe hindurchförderbar ist. Somit ist beispielsweise der Sumpf durch das Medium gebildet beziehungsweise das Medium kann sich in dem Sumpf sammeln.

Ein zweiter Aspekt der Erfindung betrifft ein vorzugsweise als Kraftwagen, insbesondere als Personenkraftwagen, ausgebildetes Kraftfahrzeug, welches eine Antriebseinrichtung gemäß dem ersten Aspekt der Erfindung umfasst.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Ansprüche zu verlassen.

Die Zeichnung zeigt in:
- Fig. 1: eine schematische Darstellung einer erfindungsgemäßen Antriebseinrichtung für ein Kraftfahrzeug;
- Fig. 2: ausschnittsweise eine schematische Darstellung der Antriebseinrichtung;
- Fig. 3: ausschnittsweise eine weitere schematische Darstellung der Antriebseinrichtung;
- Fig. 4: ausschnittsweise eine weitere schematische Darstellung der Antriebseinrichtung; und
- Fig. 5: ausschnittsweise eine weitere schematische Darstellung der Antriebseinrichtung.

In den Fig. sind gleiche oder funktionsgleiche Elemente mit gleichen Bezugszeichen versehen.

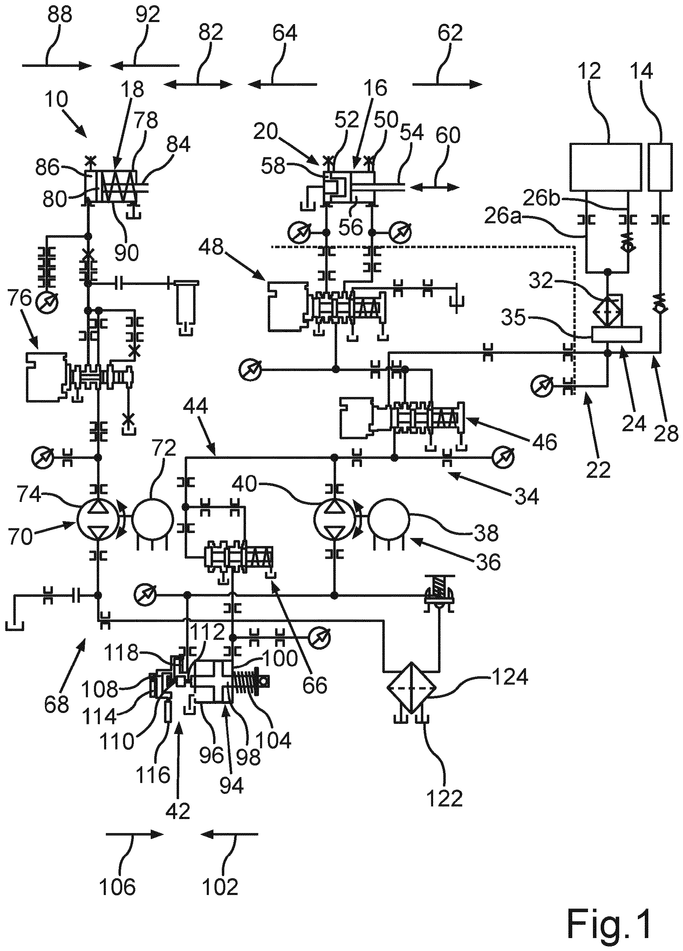

Fig. 1 zeigt ausschnittsweise in einer schematischen Darstellung eine Antriebseinrichtung 10 eines Kraftfahrzeugs, welches vorzugsweise als Kraftwagen, insbesondere als Personenkraftwagen, ausgebildet ist. Dies bedeutet, dass das Kraftfahrzeug in seinem vollständig hergestellten Zustand die Antriebseinrichtung 10 aufweist und mittels der Antriebseinrichtung 10, insbesondere rein elektrisch, angetrieben werden kann. Die Antriebseinrichtung 10 weist eine in Fig. 1 besonders schematisch dargestellte, elektrische Maschine 12 und ein in Fig. 1 besonders schematisch dargestelltes Getriebe 14 auf, über welches das Kraftfahrzeug mittels der elektrischen Maschine, insbesondere rein, elektrisch antreibbar ist. Das Getriebe weist wenigstens oder genau zwei schaltbare, das heißt einlegbare und auslegbare Gänge auf, wobei die Gänge auch als Schaltstufen bezeichnet werden und sich beispielsweise hinsichtlich ihrer Übersetzungen, über welche das Kraftfahrzeug von der elektrischen Maschine 12 angetrieben werden kann, voneinander unterscheiden. Das Getriebe 14 und somit die Antriebseinrichtung 10 weisen ein erstes Schaltelement 16 und ein zusätzlich dazu vorgesehenes, zweites Schaltelement 18 auf. Mittels des Schaltelements 16 kann durch Betätigen des Schaltelements 16 der erste Gang eingelegt und ausgelegt werden. Mittels des Schaltelements 18 kann durch Betätigen des Schaltelements 18 der zweite Gang eingelegt und ausgelegt werden. Vorzugsweise ist es vorgesehen, dass dann, wenn der erste Gang eingelegt ist, der zweite Gang ausgelegt ist. Vorzugsweise ist es vorgesehen, dass dann, wenn der zweite Gang eingelegt ist, der erste Gang ausgelegt ist. Somit kann mittels des Schaltelements 16 der erste Gang geschaltet werden, wobei mittels des Schaltelements 18 der zweite Gang geschaltet werden kann.

Die Antriebseinrichtung 10 umfasst einen ersten Kreislauf 20, welcher von einem vorzugsweise flüssigen und beispielsweise als Öl ausgebildeten Medium durchströmbar ist. Der erste Kreislauf 20 umfasst einen ersten Zweig 22, welcher zum Kühlen und/oder Schmieren der elektrischen Maschine 12 und des Getriebes 14 durchströmbar ist. Hierzu umfasst der Zweig 22 beispielsweise einen von dem Medium durchströmbaren ersten Teilzweig 24, über welchen die elektrische Maschine 12 mit dem Medium versorgbar ist, um dadurch die elektrische Maschine 12 mittels des Mediums zu kühlen und/oder zu schmieren. Aus Fig. 1 ist erkennbar, dass der Teilzweig 24 weiter verästelt und somit Äste 26a, b aufweist, die von dem Medium durchströmbar sind. Somit können beispielsweise über die Äste 26a, b unterschiedliche Teilbereiche der elektrischen Maschine 12 mit dem Medium versorgt und dadurch mittels des Mediums geschmiert und/oder gekühlt werden. Des Weiteren umfasst der Zweig 22 einen zweiten Teilzweig 28, über welchen das Getriebe 14 mit dem Medium versorgbar ist, um dadurch das Getriebe 14 mittels des Mediums über den Teilzweig 28 zu kühlen und/oder zu schmieren. Es ist erkennbar, dass der Teilzweig 28 und der Teilzweig 24 parallel zueinander geschaltet sind. Dabei ist vorliegend in dem Teilzweig 24 ein Kühler 30 zum Kühlen des Mediums angeordnet. Dem Kühler 30 ist eine Umgehungsleitung 32 zugeordnet, die an zwei Verbindungsstellen mit dem Teilzweig 24 verbunden ist. Eine erste der Verbindungsstellen ist in dem Teilzweig 24 stromauf des Kühlers 30 angeordnet, und die zweite Verbindungsstelle ist in dem Teilzweig 24 stromab des Kühlers 30 und stromauf der elektrischen Maschine 12 angeordnet. Dadurch kann an der ersten Verbindungsstelle zumindest ein Teil des den Teilzweig 24 durchströmenden Mediums mittels der Umgehungsleitung 32 aus dem Teilzweig 24 abgezweigt und in die Umgehungsleitung 32 eingeleitet werden. Das in die Umgehungsleitung 32 eingeleitete Medium durchströmt die Umgehungsleitung 32 und umgeht dabei den Kühler 30 und wird somit nicht mittels des Kühlers 30 gekühlt. Dabei ist vorzugsweise in den Teilzweig 24 ein vorzugsweise als Thermostatventil ausgebildetes Ventilelement 35 angeordnet, mittels welchem eine die Umgehungsleitung 32 durchströmende und somit den Kühler 30 umgehende Menge des Mediums, insbesondere in Abhängigkeit von einer Temperatur des Mediums, einstellbar ist.

Des Weiteren umfasst der Kreislauf 20 einen zweiten Zweig 34, welcher zum Betätigen des Schaltelements 16 von dem Medium durchströmbar ist. Dies bedeutet, dass das Schaltelement 16 über den zweiten Zweig 34 mit dem Medium versorgt werden kann, um dadurch das Schaltelement 16 mittels des den zweiten Zweig 34 durchströmenden Mediums zu betätigen. Die Antriebseinrichtung 10 weist außerdem eine dem Kreislauf 20 zugeordnete, elektrische Pumpe 36 auf, mittels welcher durch Betreiben, insbesondere elektrisches Betreiben, der Pumpe 36 das Medium durch den Kreislauf 20 hindurchgefördert werden kann. Dies bedeutet, dass die Zweige 22 und 34 mittels der Pumpe 36 mit dem Medium versorgbar sind. Die Pumpe 36 umfasst dabei einen Elektromotor 38 und ein Förderelement 40, welches beispielsweise in einem Pumpengehäuse der Pumpe 36 angeordnet ist. Durch Versorogen des Elektromotors 38 mit elektrischer Energie beziehungsweise mit elektrischem Strom wird der Elektromotor 38 betrieben, wodurch der Elektromotor 38 das Förderelement 40 antreibt und hierdurch relativ zu dem Pumpengehäuse bewegt, insbesondere dreht.

Um nun auf besonders gewichts-, kosten- und bauraumgünstige Weise einen besonders vorteilhaften und insbesondere einen besonders energieeffizienten Betrieb der Antriebseinrichtung 10 realisieren zu können, umfasst die Antriebseinrichtung 10, insbesondere das Getriebe 14, eine Parksperre 42. Dabei weist der Kreislauf 20 einen dritten Zweig 44 auf, welcher zumindest teilweise von dem Zweig 22 und/oder von dem Zweig 34 räumlich beziehungsweise fluidisch getrennt sein kann. Dabei ist zum Betätigen der Parksperre 42 der Zweig 44 von dem Medium durchströmbar. Mit anderen Worten, um die Parksperre 42 zu betätigen und hierdurch einzulegen und/oder auszulegen, wird die Parksperre 42 über den Zweig 44 mit dem mittels der Pumpe 36 geförderten Medium versorgt. Die Parksperre 42 ist zwischen einem eingelegten Zustand und einem ausgelegten Zustand verstellbar beziehungsweise umschaltbar. Der eingelegte Zustand wird auch als Sperrzustand bezeichnet, wobei der ausgelegte Zustand auch als Freigabezustand bezeichnet wird.

Die elektrische Maschine 12 kann in ihrem Motorbetrieb und somit als Elektromotor betrieben werden. Somit ist die elektrische Maschine 12 in dem Motorbetrieb ein Antriebsmotor, welcher über seine Abtriebswelle Drehmomente zum Antreiben des Kraftfahrzeugs bereitstellen kann. Die von dem Antriebsmotor bereitgestellten Drehmomente können beispielsweise in das Getriebe 14 über eine nicht dargestellte, erste Wellenform einer Eingangswelle des Getriebes eingeleitet werden, wobei die Eingangswelle auch als Getriebeeingangswelle bezeichnet wird. Das Getriebe 14 weist beispielsweise auch eine in den Fig. nicht dargestellte, zweite Welle auf, welche eine auch als Getriebeausgangswelle bezeichnete Ausgangswelle des Getriebes ist. Aus dem jeweiligen, von dem Antriebsmotor über dessen Abtriebswelle bereitgestellten Drehmoment kann ein Antriebsdrehmoment resultieren, welches von dem Getriebe 14 über dessen Ausgangswelle bereitgestellt wird. Dabei wird beispielsweise das jeweilige, von dem Antriebsmotor bereitgestellte Drehmoment mittels des eingelegten Gangs des Getriebes 14 gemäß der Übersetzung des eingelegten Gangs umgewandelt und dadurch in das Antriebsdrehmoment überführt beziehungsweise umgewandelt. In dem eingelegten Zustand sichert die Parksperre 42 die Ausgangswelle des Getriebes 14 gegen eine vollständige Drehung relativ zu einem auch als Getriebegehäuse bezeichneten Gehäuse des Getriebes 14 formschlüssig, sodass beispielsweise das Kraftfahrzeug dann, wenn es auf einem Gefälle geparkt ist, gegen ein unerwünschtes Wegrollen gesichert werden kann. In dem ausgelegten Zustand jedoch gibt die Parksperre 42 die Ausgangswelle für eine, insbesondere freie, Drehung relativ zu dem Getriebegehäuse frei, sodass in dem ausgelegten Zustand die Ausgangswelle frei beziehungsweise mehrmals vollständig relativ zu dem Getriebegehäuse gedreht werden kann. Um somit das Kraftfahrzeug mittels der elektrischen Maschine anzutreiben, befindet sich die Parksperre 42 in ihrem ausgelegten Zustand.

Die Antriebseinrichtung 10 umfasst ein erstes Ventilelement 46, welches beispielsweise in dem Kreislauf 20 angeordnet ist. Über das Ventilelement 46 sind die Zweige 22 und 34 mit dem mittels der Pumpe 36 geförderten Medium versorgbar. Dabei ist das Ventilelement zwischen einem Kühlzustand und einem Betätigungszustand umschaltbar. In dem Koppelzustand ist der erste Zweig 22 über das Ventilelement 46 fluidisch mit der Pumpe 36 verbunden, wodurch der erste Zweig über das Ventilelement 46 mit dem mittels der Pumpe 36 geförderten Medium versorgbar ist, während jedoch der zweite Zweig 34 mittels des Ventilelements 46 von der Pumpe 36 fluidisch getrennt ist. Um somit mittels der Pumpe 36 das Medium durch den Zweig 22 hindurch zu fördern, wird das Ventilelement 46 in den Kühlzustand geschaltet. Dabei unterbleibt ein Versorgen des Schaltelements 16 mit dem mittels der Pumpe 36 geförderten Medium. In dem Betätigungszustand ist der zweite Zweig 34 über das Ventilelement 46 fluidisch mit der Pumpe 36 verbunden, wodurch in dem Betätigungszustand der zweite Zweig 34 über das Ventilelement 46 mit dem mittels der Pumpe 36 geförderten Medium versorgbar ist, während jedoch der erste Zweig 22 mittels des Ventilelements 46 fluidisch von der Pumpe 36 getrennt ist. Um somit das Schaltelement 16 zu betätigen und den ersten Gang zu schalten, wird das Ventilelement 46 in den Betätigungszustand geschaltet. Dabei unterbleibt ein mittels der Pumpe 36 bewirktes Fördern des Mediums durch den Zweig 22. Zum Betätigen der Parksperre 42 befindet sich das Ventilelement 46 in dem Betätigungszustand.

Die Antriebseinrichtung 10 weist außerdem ein in dem zweiten Zweig 34 angeordnetes, zweites Ventilelement 48 auf, welches zwischen einem Einlegezustand und einem Auslegezustand umschaltbar ist. In dem Einlegezustand ist das Schaltelement 16 über das zweite Ventilelement 48 fluidisch mit dem ersten Ventilelement 46 verbunden, sodass in dem Einlegezustand das Schaltelement 16, während sich das Ventilelement 46 in dem Betätigungszustand befindet, über die Ventilelemente 46 und 48 mit dem mittels der Pumpe 36 förderbaren Medium versorgbar ist, wodurch das Schaltelement 16 derart betätigbar ist beziehungsweise derart betätigt wird, dass der erste Gang eingelegt wird. In dem Auslegezustand ist das Schaltelement 16 über das zweite Ventilelement 48 fluidisch mit dem ersten Ventilelement 46 verbunden, sodass in dem Auslegezustand das Schaltelement 16, während sich das erste Ventilelement in dem Betätigungszustand befindet, über die Ventilelemente 46 und 48 mit dem mittels der Pumpe 36 geförderten Medium derart versorgbar ist beziehungsweise derart versorgt wird, dass das Schaltelement 16 derart betätigbar ist beziehungsweise derart betätigt wird, dass der erste Gang ausgelegt wird.

Aus Fig. 1 ist erkennbar, dass das Schaltelement 16 ein beispielsweise als Zylinder ausgebildetes Gehäuse 50 und einen in dem Gehäuse 50 angeordneten und relativ zu dem Gehäuse 50 translatorisch bewegbaren Kolben 52 sowie eine Kolbenstange 54 aufweist, welche mit dem Kolben 52 verbunden und dadurch mit dem Kolben 52 relativ zu dem Gehäuse 50 translatorisch mit bewegbar ist. Der Kolben 52 und das Gehäuse 50 begrenzen eine erste Arbeitskammer 56 und eine zweite Arbeitskammer 58 des Schaltelements 16. Der Kolben 52 und die Kolbenstange 54 sind entlang einer in Fig. 1 durch einen Pfeil 60 veranschaulichten Bewegungsrichtung relativ zu dem Gehäuse 50 translatorisch bewegbar, wobei sich die Arbeitskammern 56 und 58 entlang der Bewegungsrichtung gegenüberliegen. Beispielsweise ist in dem Einlegezustand die Arbeitskammer 58 über das Ventilelement 48 fluidisch mit dem Ventilelement 46 verbunden, während die Arbeitskammer 56 mittels des Ventilelements 48 von dem Ventilelement 46 getrennt ist. In dem Auslegezustand ist beispielsweise die Arbeitskammer 56 über das Ventilelement 48 fluidisch mit dem Ventilelement 46 verbunden, während die Arbeitskammer 58 mittels des Ventilelements 48 fluidisch von dem Ventilelement 46 getrennt ist. Somit wird dann, wenn sich das Ventilelement 46 in dem Betätigungszustand und das Ventilelement 48 in dem Einlegezustand befindet und mittels der Pumpe 36 das Medium gefördert wird, das Medium über die Ventilelemente 46 und 48 in die Arbeitskammer 58 hineingefördert. Hierdurch wird der Kolben 52 in eine parallel zu der Bewegungsrichtung verlaufende und in Fig. 1 durch einen Pfeil 62 veranschaulichte, erste Richtung relativ zu dem Gehäuse 50, insbesondere translatorisch, bewegt, wodurch der erste Gang eingelegt wird. Zum Auslegen des ersten Gangs ist Folgendes vorgesehen: das Ventilelement 48 befindet sich in seinem Auslegezustand, und das Ventilelement 46 befindet sich in seinem Betätigungszustand, während mittels der Pumpe 36 das Medium gefördert wird. Hierdurch wird das Medium mittels der Pumpe 36 über die Ventilelemente 46 und 48 in die Arbeitskammer 56 hineingefördert. In der Folge wird der Kolben 52 in eine parallel zur Bewegungsrichtung verlaufende, der ersten Richtung entgegengesetzte und in Fig. 1 durch einen Pfeil 64 veranschaulichte, zweite Richtung relativ zu dem Gehäuse 50, insbesondere translatorisch, bewegt. Hierdurch wird der erste Gang ausgelegt. Es ist erkennbar, dass der Kolben 52 ein Schaltteil des Schaltelements 16 ist, wobei das Schaltteil bedarfsgerecht in die erste Richtung und in die zweite Richtung bewegt werden kann, um dadurch den ersten Gang bedarfsgerecht einzulegen und auszulegen.

Das Schaltelement 16 ist vorzugsweise ein formschlüssiges Schaltelement, insbesondere eine auch als Klauenkupplung bezeichnete Klaue. Durch Betätigen des Schaltelements 16 ist das Schaltelement 16 beispielsweise zwischen einem Koppelzustand und einem Entkoppelzustand umschaltbar. Beispielsweise kann das Schaltelement aus dem Entkoppelzustand in den Koppelzustand verstellt werden, indem der Kolben 52 in die erste Richtung bewegt wird. Durch Bewegen des Kolbens in die zweite Richtung wird beispielsweise das Schaltelement aus dem Koppelzustand in den Entkoppelzustand umgeschaltet. Die Ventilelemente 46 und 48 sind vorzugsweise elektro-hydraulische Ventilelemente und somit elektrisch zwischen dem Betätigungszustand und dem Kühlzustand beziehungsweise zwischen dem Einlegezustand und dem Auslegezustand umschaltbar.

Um mittels der Pumpe 36 das Medium durch den Zweig 22 hindurch zu fördern, wird beispielsweise das erste Ventilelement 46 in den Kühlzustand geschaltet. Um mittels der Pumpe 36 das Schaltelement 16 zu betätigen, wird das Ventilelement 46 in den Betätigungszustand geschaltet. Der Einlegezustand und der Auslegezustand des Ventilelements 48 werden zusammenfassend auch als Zustände des Ventilelements 48 bezeichnet. Um beispielsweise die Parksperre 42 in besonders kurzer Zeit betätigen und somit beispielsweise von dem eingelegten Zustand in den ausgelegten Zustand und/oder von dem ausgelegten Zustand in den eingelegten Zustand überführen zu können, wird beispielsweise das Ventilelement 46 in den Betätigungszustand geschaltet, und das Ventilelement 48 wird in denjenigen Zustand geschaltet, der bewirkt, dass dann, wenn sich das Ventilelement 46 in dem Betätigungszustand befindet und mittels der Pumpe 36 das Medium gefördert wird, ein hieraus resultierendes Bewegen des Kolbens 52 beziehungsweise ein hieraus resultierendes Betätigen des Schaltelements 16 unterbleibt. Ist somit beispielsweise der erste Gang ausgelegt, wenn ein Betätigen der Parksperre 42 erfolgen soll, so wird das Ventilelement 48 in seinen Auslegezustand geschaltet. Ist jedoch beispielsweise der erste Gang eingelegt, wenn eine Betätigung der Parksperre 42 erfolgen soll, so wird das Ventilelement 48 in seinen Einlegezustand geschaltet. Dann kann dann, wenn mittels der Pumpe 36 das Medium gefördert wird, in kurzer Zeit ein hoher Druck des Mediums aufgebaut werden, dessen Druck sich beispielsweise über die Ventilelemente 46 und 48 an dem Kolben 52 abstützen kann, sodass mittels des Drucks die Parksperre 42 betätigt werden kann, ohne dass zuerst der Kolben 52 über einen übermäßigen Weg und dabei insbesondere in eine seiner Endlagen bewegt werden muss. Es ist erkennbar, dass in dem Zweig 44 ein auch als Schaltschieber bezeichnetes, drittes Ventilelement 66 angeordnet ist, dessen Funktion im Folgenden noch genauer erläutert wird. Insbesondere ist der Schaltschieber in Strömungsrichtung des den Zweig 44 durchströmenden Mediums stromab der Pumpe 36 und stromauf der Parksperre 42 angeordnet.

Das Getriebe 14 und somit die Antriebseinrichtung 10 umfassen außerdem das Schaltelement 18, welches vorliegend vorzugsweise als ein reibschlüssiges Schaltelement und dabei insbesondere als eine Lamellenkupplung ausgebildet ist. Dabei weist die Antriebseinrichtung 10 außerdem einen zweiten Kreislauf 68 auf, welcher vorzugsweise zumindest teilweise fluidisch und/oder örtlich von dem Kreislauf 20 getrennt ist. Dabei ist zum Betätigen des Schaltelements 18 der Kreislauf 68 von dem Medium durchströmbar, wobei durch Betätigen des Schaltelements 18 der zweite Gang einlegbar und/oder auslegbar ist. Außerdem umfasst die Antriebseinrichtung 10 eine zusätzlich zu der Pumpe 36 vorgesehene, zweite elektrische Pumpe 70, mittels welcher das Medium durch den Kreislauf 68 hindurchgefördert werden kann. die Pumpe 70 umfasst einen zweiten Elektromotor 72 und ein zweites Förderelement 74, welches in einem zweiten Pumpengehäuse der Pumpe 70 angeordnet und relativ zu dem zweiten Pumpengehäuse bewegbar, insbesondere drehbar, ist. Durch Bewegen des Förderelements 74 relativ zum zweiten Pumpengehäuse wird mittels des Förderelements 74 das Medium gefördert. Durch Versorgen des Elektromotors 72 mit elektrischer Energie beziehungsweise elektrischem Strom wird der Elektromotor 72 betrieben. Durch Betreiben des Elektromotors 72 treibt der Elektromotor 72 das Förderelement 74 an, wodurch das Förderelement 74 relativ zu dem zweiten Pumpengehäuse bewegt, insbesondere gedreht, wird. In dem Kreislauf 68 ist ein beispielsweise als geregeltes Druckbegrenzungsventil ausgebildetes, viertes Ventilelement 76 angeordnet, über welches das Schaltelement 18 mit dem mittels der Pumpe 70 geförderten Medium versorgbar ist.

Aus Fig. 1 ist erkennbar, dass das Schaltelement 18 ein beispielsweise als Zylinder ausgebildetes Gehäuse 78 und einen Kolben 80 aufweist, welcher, insbesondere translatorisch, bewegbar in dem Gehäuse 78 aufgenommen ist. Der Kolben 80 kann in eine in Fig. 1 durch einen Doppelpfeil 82 veranschaulichte Kolbenbewegungsrichtung relativ zu dem Gehäuse 78, insbesondere translatorisch, bewegt werden. Außerdem weist das Schaltelement 18 eine Kolbenstange 84 auf, welche mit dem Kolben 80 verbunden und somit mit dem Kolben 80 relativ zu dem Gehäuse 78 mit bewegbar ist. Über das Ventilelement 76 kann mittels der Pumpe 70 das Medium in eine Arbeitskammer 86 des Schaltelements 18 hinein gefördert werden, wobei die Arbeitskammer 86 durch den Kolben 80 und das Gehäuse 78 begrenzt ist. Durch Fördern des Mediums in die Arbeitskammer 86 wird der Kolben 80 in eine parallel zur Kolbenbewegungsrichtung verlaufende und in Fig. 1 durch einen Pfeil 88 veranschaulichte erste Betätigungsrichtung relativ zu dem Gehäuse 78 bewegt. Hierdurch wird beispielsweise das Schaltelement beziehungsweise die Lamellenkupplung geschlossen. Durch relativ zu dem Gehäuse 78 erfolgendes Bewegen des Kolbens 80 in die erste Betätigungsrichtung wird ein Federelement 90 des Schaltelements 18 gespannt. Beispielsweise ist das Federelement 90 entlang der Kolbenbewegungsrichtung einerseits an dem Kolben 80 und andererseits an dem Gehäuse 78 abstützbar oder abgestützt. Durch Spannen des Federelements 90 stellt das Federelement 90 eine Federkraft bereit. Mittels dieser Federkraft kann der Kolben 80 in eine in Fig. 1 durch einen Pfeil 92 veranschaulichte, parallel zur Kolbenbewegungsrichtung verlaufende und der ersten Betätigungsrichtung entgegengesetzte, zweite Betätigungsrichtung relativ zu dem Gehäuse 78 bewegt werden. Hierdurch wird beispielsweise die Lamellenkupplung geöffnet. Durch Schließen der Lamellenkupplung wird beispielsweise der zweite Gang eingelegt. Beispielsweise durch Öffnen der Lamellenkupplung wird der zweite Gang ausgelegt.

Zum, insbesondere hydraulischen, Betätigen der Parksperre 42 umfasst diese einen Hydraulikzylinder 94, welcher ein Gehäuse 96 und einen auch als Sperrkolben bezeichneten Kolben 98 umfasst. Der Sperrkolben ist zumindest teilweise translatorisch bewegbar in dem Gehäuse 96 angeordnet und relativ zu dem Gehäuse 96 translatorisch bewegbar. Der Kolben 98 und das Gehäuse 96 begrenzen einen Betätigungsraum 100, in welchem beispielsweise mittels der Pumpe 36 über den Zweig 44 das Medium hineingefördert werden kann, wodurch der Sperrkolben relativ zu dem Gehäuse 96 in eine in Fig. 1 durch einen Pfeil 102 veranschaulichte Parksperrenrichtung translatorisch bewegt wird. Hierdurch wird die Parksperre 42 hydraulisch betätigt und dadurch beispielsweise ausgelegt.

Der Hydraulikzylinder 94 umfasst außerdem ein vorliegend mechanisches Federelement 104, welches einerseits mit dem Sperrkolben und andererseits zumindest mittelbar mit dem Gehäuse 96 und/oder mit dem Getriebegehäuse gekoppelt ist. Durch Bewegen des Kolbens in die erste Parksperrenrichtung wird das Federelement 104 gespannt. Dadurch stellt das Federelement 104 eine Federkraft bereit, die in eine der ersten Parksperrenrichtung entgegengesetzte und in Fig. 1 durch einen Pfeil 106 veranschaulichte zweite Richtung wirkt. Mittels der von dem Federelement 104 bereitgestellten Federkraft kann der Sperrkolben in die der ersten Parksperrenrichtung entgegengesetzte, zweite Parksperrenrichtung relativ zu dem Gehäuse 96 translatorisch bewegt werden, wodurch die Parksperre federbetätigt beziehungsweise federkraftbetätigt eingelegt wird.

Die Parksperre 42 umfasst dabei außerdem ein Verriegelungselement 108, welches relativ zu dem Gehäuse 96 zwischen einer Verriegelungsstellung und einer Entriegelungsstellung bewegbar ist. Insbesondere ist das Verriegelungselement 108 um eine Schwenkachse relativ zu dem Getriebegehäuse beziehungsweise relativ zu dem Gehäuse 96 zwischen der Verriegelungsstellung und der Entriegelungsstellung verschwenkbar. Ist die Parksperre 42 eingelegt, während sich das Verriegelungselement 108 in der Verriegelungsstellung befindet, so greift das Verriegelungselement 108 in eine erste Ausnehmung 110 des Sperrkolbens ein, wodurch das Verriegelungselement 108 formschlüssig mit dem Sperrkolben zusammenwirkt. Dadurch wird der Sperrkolben mittels des Verriegelungselements 108 formschlüssig gegen eine Bewegung aus einer den eingelegten Zustand der Parksperre 42 bewirkenden, eingelegten Stellung des Sperrkolbens in eine den ausgelegten Zustand der Parksperre 42 bewirkende, ausgelegte Stellung des Sperrkolbens gesichert, sodass die Parksperre 42 sicher eingelegt bleibt. Dabei ist der Sperrkolben zwischen der eingelegten Stellung und der ausgelegten Stellung relativ zu dem Gehäuse 96 translatorisch bewegbar. Befindet sich der Sperrkolben beispielsweise in der ausgelegten Stellung, das heißt ist die Parksperre 42 ausgelegt, während sich das Verriegelungselement 108 in der Verriegelungsstellung befindet, so greift das Verriegelungselement 108 in eine zweite Ausnehmung 112 des Sperrkolbens ein, wodurch das Verriegelungselement 108 mit dem Sperrkolben formschlüssig zusammenwirkt. Hierdurch wird der Sperrkolben mittels des Verriegelungselements 108, insbesondere gegen die von dem Federelement 104 bereitgestellte Federkraft, in der ausgelegten Stellung gehalten und somit gegen eine Bewegung aus der ausgelegten Stellung in die eingelegte Stellung formschlüssig gesichert.

Um den Sperrkolben aus der eingelegten Stellung in die ausgelegte Stellung beziehungsweise umgekehrt von der ausgelegten Stellung in die eingelegte Stellung bewegen und somit die Parksperre 42 aus dem eingelegten Zustand in den ausgelegten Zustand beziehungsweise umgekehrt aus dem ausgelegten Zustand in den eingelegten Zustand verstellen zu können, wird das Verriegelungselement 108 aus der Verriegelungsstellung in die Entriegelungsstellung bewegt, insbesondere verschwenkt. Hierdurch wird das formschlüssige Zusammenwirken des Verriegelungselements 108 mit dem Sperrkolben aufgehoben, sodass der Sperrkolben aus der eingelegten Stellung in die ausgelegte Stellung beziehungsweise aus der ausgelegten Stellung in die eingelegte Stellung bewegt, insbesondere verschoben werden kann. Durch Bewegen, insbesondere Verschwenken, des Verriegelungselements 108 aus der Verrieglungsstellung in die Entriegelungsstellung wird vorzugsweise ein mechanisches Federelement 114 der Parksperre 42 gespannt, insbesondere komprimiert, sodass zumindest in der Entriegelungsstellung das Federelement 114 eine Federkraft bereitstellt. Mittels der von dem Federelement 114 bereitgestellten Federkraft kann das Verriegelungselement 108 insbesondere dann, wenn sich der Sperrkolben in der eingelegten Stellung beziehungsweise in der ausgelegten Stellung befindet, aus der Entriegelungsstellung in die Verriegelungsstellung bewegt und dadurch in Eingriff mit der jeweiligen Ausnehmung 110 beziehungsweise 112 gebracht werden.

Um nun das Verriegelungselement 108, insbesondere gegen die von dem Federelement 114 bereitgestellte Federkraft, bedarfsgerecht aus der Verriegelungsstellung in die Entriegelungsstellung bewegen zu können, umfasst die Parksperre 42 einen vorzugsweise elektrisch und/oder hydraulisch betreibbaren Aktor 116. Bei dem in Fig. 1 gezeigten Ausführungsbeispiel ist der Aktor 116 als ein Hubmagnet ausgebildet. Der Hubmagnet weist ein Gehäuse und einen Läufer auf, welche durch das Versorgen des Hubmagneten mit elektrischer Energie zumindest teilweise aus dem Gehäuse des Hubmagneten ausgefahren wird. Hierdurch wird das Verriegelungselement 108 mittels des Läufers aus der Verriegelungsstellung in die Entriegelungsstellung bewegt, insbesondere verschwenkt. Alternativ oder zusätzlich kann die Parksperre 42 einen weiteren Hydraulikzylinder 118 aufweisen, mittels welchem das Verriegelungselement 108 hydraulisch aus der Verriegelungsstellung in die Entriegelungsstellung bewegt werden kann.

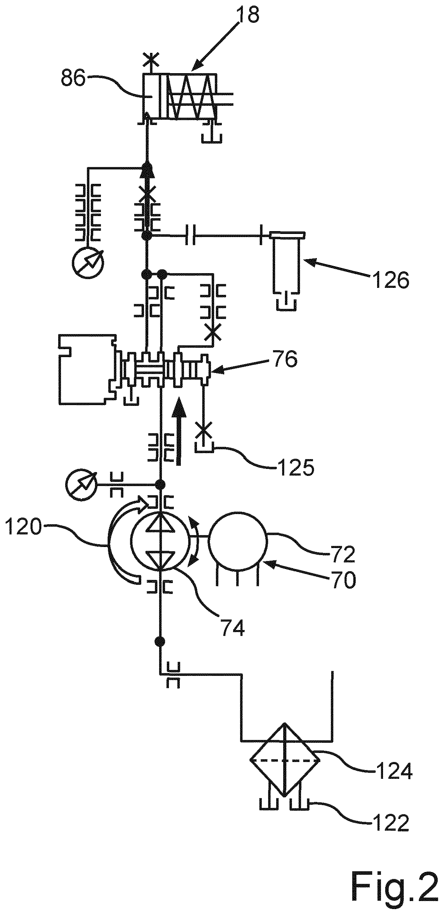

Aus Fig. 2 ist besonders gut ein Versorgen des Schaltelements 18 mit dem Medium und insbesondere ein Fördern des Mediums in die Arbeitskammer 86 erkennbar. Hierzu wird das Förderelement 74 mittels des Elektromotors 72 relativ zu dem Pumpengehäuse der Pumpe 70 in eine erste, durch eine Pfeil 120 veranschaulichte Pumpenrichtung bewegt, insbesondere gedreht. Außerdem ist aus Fig. 1 und 2 erkennbar, dass die Antriebseinrichtung 10 ein den Pumpen 36 und 70 und somit den Kreisläufen 20 und 68 gemeinsamen Sumpf 122 aufweist, in welchem das Medium aufnehmbar oder aufgenommen ist. Außerdem weist die Antriebseinrichtung 10 einen den Pumpen 36 und 70 und somit einen den Kreisläufen 20 und 68 gemeinsamen Filter 124 auf, welcher in Strömungsrichtung des von dem Sumpf 122 zu der jeweiligen Pumpe 36 beziehungsweise 70 strömenden Mediums stromab des Sumpfes 122 und stromauf der jeweiligen Pumpe 36 beziehungsweise 70 angeordnet ist. Mittels des Filters 124 wird das von dem Sumpf 122 zu der jeweiligen Pumpe 36 beziehungsweise 70 strömende Medium gefiltert. Dabei wird der Filter 124 auch als Doppelfilter bezeichnet. Der Filter 124 weist jedoch je Pumpe 36 beziehungsweise 70 wenigstens oder genau eine Ansaugöffnung auf, wobei die Ansaugöffnungen voneinander getrennt sind. Somit kann beispielsweise die Pumpe 70 bezogen auf die Ansaugöffnungen ausschließlich über eine erste der Ansaugöffnungen das Medium aus dem Sumpf 122 ansaugen und zu sich fördern. Außerdem kann somit die Pumpe 36 bezogen auf die Ansaugöffnungen ausschließlich über eine von der ersten Ansaugöffnung getrennte, zweite der Ansaugöffnungen das Medium aus dem Sumpf 122 ansaugen und zu sich fördern. Eine Funktion des Kreislaufs 68 umfasst insbesondere, dass beispielsweise als Bremse, insbesondere als Lamellen- beziehungsweise Reibbremse ausgebildete Schaltelement 18 mit möglichst geringem Mediumüberschuss mit dem Medium zu versorgen. Beispielsweise wird das mittels der Pumpe 70 zu dem Ventilelement 76 über das Ventilelement 76 zu dem Schaltelement 18 geförderte Medium an einer Tankkante des Ventilelements 76 gestaut, wodurch ein gewünschter Druck des Mediums insbesondere in dem gesamten Kreislauf 68 eingestellt, insbesondere geregelt, wird. Ist die Bremse geschaltet beziehungsweise eingelegt, so arbeitet beispielsweise die Pumpe 70 permanent gegen einen insbesondere durch die eingelegte Bremse bewirkten Druckwiderstand. Die Pumpe 70 weist beispielsweise eine Mindestdrehzahl auf, durch die eine Überschussmenge des Mediums erzeugt wird. Diese Überschussmenge gleich eine Leckageströmung aus, die beispielsweise zur Kühlung von Lamellen der Bremse verwendet werden kann. Ein weiterer Teil der Überschussmenge kann, soweit vorhanden, in einen Tank 125 abgeführt werden. Außerdem ist in Fig. 2 ein mit 126 bezeichneter Vorhalt für einen Dämpfer erkennbar.

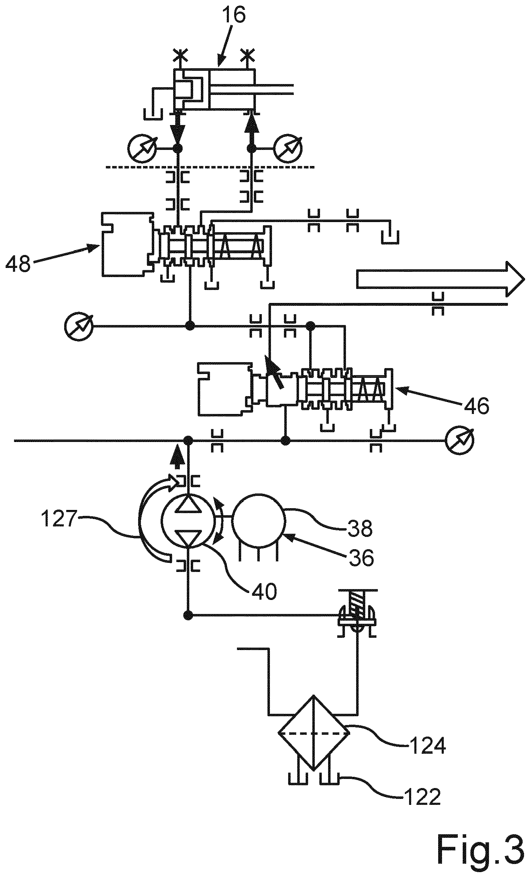

In Fig. 3 ist besonders gut das Versorgen des Schaltelements 18 mit dem Medium erkennbar. Außerdem ist aus Fig. 3 erkennbar, dass die Pumpe 36 sowohl das Schaltelement 18 als auch den Zweig 22 zum Kühlen und/oder Schmieren der elektrischen Maschine 12 und des Getriebes 14 mit dem Medium versorgt. Hierzu wird die Pumpe 36 in einem Vorwärtsbetrieb betrieben, in welchem der Elektromotor 38 das Förderelement 40 derart antreibt, dass das Förderelement 40 relativ zu dem Pumpengehäuse der Pumpe 36 in eine in Fig. 3 durch einen Pfeil 127 veranschaulichte, erste Förderelementrichtung bewirkt, insbesondere gedreht, wird. Wird das Schaltelement 18 angesteuert, mithin betätigt, so wird für eine Zeitdauer, während welcher das Schaltelement 18 betätigt wird, eine Versorgung des Zweigs 22 mit dem mittels der Pumpe 36 geförderten Medium unterbrochen. Im Folgenden wird ein Ansteuerungsprinzip veranschaulicht. Das Ventilelement 48 wird in den Einlegezustand oder Auslegezustand geschaltet, je nachdem, ob der erste Gang eingelegt oder ausgelegt werden soll. Das Ventilelement 48 wird zunächst in seinen Kühlzustand geschaltet. Die Pumpe 36, insbesondere das Förderelement 40, wird beispielsweise auf ihrer beziehungsweise auf seine maximale Drehzahl gebracht. Durch das Ventilelement 46 wird insbesondere durch schlagartiges Umschalten des Ventilelements 46 von dem Kühlzustand in den Betätigungszustand ein mittels der Pumpe 36 bewirkter, beziehungsweise realisierter oder geförderter Volumenstrom des Mediums schlagartig von dem Zweig 22 zu dem und in den Zweig 34 und somit zu dem Schaltelement 18 umgeleitet, wodurch das Schaltelement 18 besonders schnell betätigt beziehungsweise geschaltet werden kann.

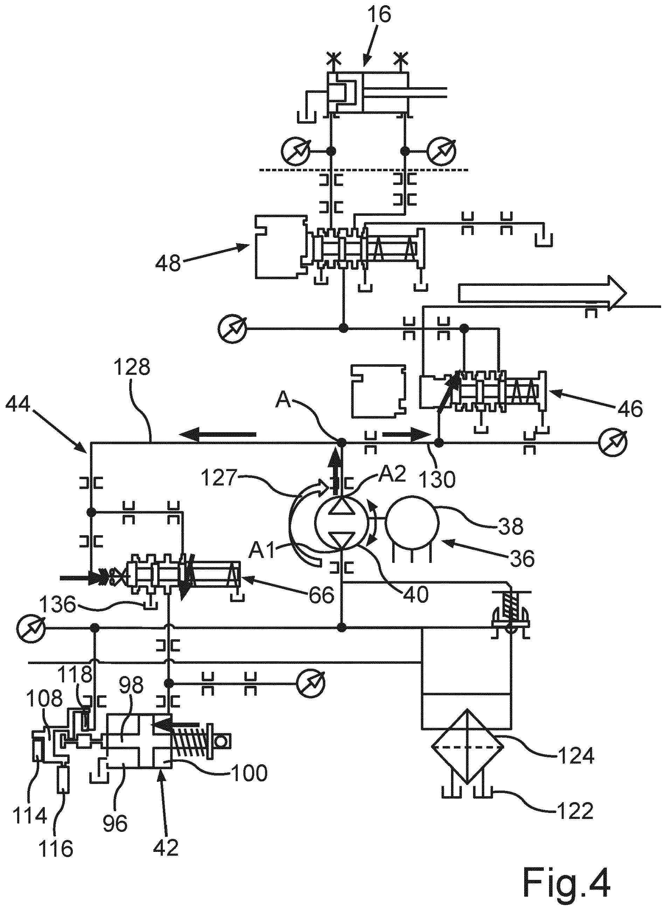

Anhand von Fig. 4 wird im Folgenden das Auslegen der Parksperre 42 veranschaulicht. Zum Auslegen der Parksperre 42 wird die Pumpe 36 in ihrem Vorwärtsbetrieb betrieben, mithin wird das Förderelement 40 mittels des Elektromotors 38 in die erste Förderelementrichtung bewegt, insbesondere gedreht (Pfeil 127). Wie zuvor beschrieben wird das Ventilelement 48 in denjenigen Zustand geschaltet, der bewirkt, dass dann, wenn die Pumpe 36 das Medium fördert und sich das Ventilelement 46 in dem Betätigungszustand befindet, eine daraus resultierende Bewegung des Kolbens 52 unterbleibt. Somit wird zum Auslegen der Parksperre 42 das Ventilelement 46 in den Betätigungszustand geschaltet. Beispielsweise wird der Hubmagnet bestromt, wodurch der Sperrkolben entriegelt wird. Die Pumpe 36 fördert das vorzugsweise als Öl ausgebildete Medium beispielsweise zunächst in Richtung des Schaltelements 18 sowie zu dem Schaltschieber. Da der Kolben 52 nicht bewegt wird und somit das Schaltelement 18 kein Medium von der Pumpe 36 abnimmt, baut sich ein Druck auf, durch welchen der Schaltschieber insbesondere aus einer Ausgangsstellung des Schaltschiebers in eine Schaltstellung des bewegt wird. Hierdurch wird eine Zuleitung 128, insbesondere des Zweigs 44 über den Schaltschieber mit dem Betätigungsraum 100 fluidisch verbunden, wodurch der Sperrkolben entgegen der durch das Federelement 104 bereitgestellten Federkraft in die ausgelegte Stellung bewegt wird. Dann wird die Bestromung des Hubmagneten abgestellt beziehungsweise beendet, wodurch der Sperrkolben verriegelt wird. Es ist erkennbar, dass die Pumpe 36, insbesondere ihr Pumpengehäuse, einen ersten Anschluss A1 und einen zweiten Anschluss A2 aufweist. Über den Anschluss A1 ist die Pumpe 36 beispielsweise mit dem Sumpf 122 fluidisch verbunden oder verbindbar, sodass die Pumpe 36 über ihren Anschluss A1 das Medium aus dem Sumpf 122 ansaugen kann. Über den Anschluss A2 ist das Ventilelement 46 mit dem mittels der Pumpe 36 geförderten Medium versorgbar, sodass beispielsweise der Anschluss A2 fluidisch mit dem Ventilelement 46 verbunden oder verbindbar ist. Hierzu ist ein erstes Leitungselement 130 vorgesehen, welches beispielsweise einerseits, insbesondere einen Ends, fluidisch mit dem Anschluss A2 und andererseits, beziehungsweise anderen Ends, fluidisch mit dem Ventilelement 46 verbunden ist. Dabei ist die Zuleitung 128 ein zweites Leitungselement, welches an einer Abzweigstelle A fluidisch mit dem ersten Leitungselement 130 verbunden ist. In Strömungsrichtung des das Leitungselement 130 durchströmenden und dabei von dem Anschluss A2 zu dem Ventilelement 46 strömenden Mediums ist die Abzweigstelle A stromab des Anschlusses A2 und somit stromab der Pumpe 36 und stromauf des Ventilelements 46 angeordnet. Es ist erkennbar, dass die Zuleitung 128 an der Abzweigstelle A von dem Leitungselement 130 abzweigt. Ferner ist erkennbar, dass die Parksperre 42 beziehungsweise der Betätigungsraum 100 über die Zuleitung 128 mit dem mittels der Pumpe 36 geförderten Medium versorgbar ist, insbesondere um dadurch die Parksperre 42 auszulegen.

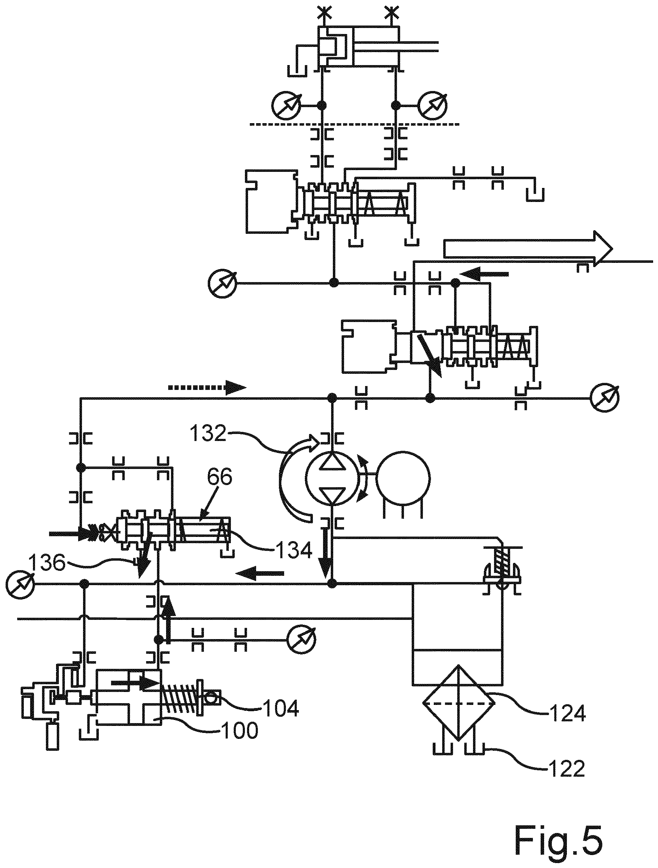

Schließlich wird anhand von Fig. 5 das Einlegen der Parksperre 42 veranschaulicht. Das Ventilelement 46 wird beispielsweise in den Kühlzustand geschaltet. Die Pumpe 36 wird in ihrem Rückwärtsbetrieb betrieben. Hierunter ist zu verstehen, dass der Elektromotor 38 das Förderelement 40 derart antreibt, dass das Förderelement 40 in eine in Fig. 5 durch einen Pfeil 132 veranschaulichte, der ersten Förderelementrichtung entgegengesetzte, zweite Förderelementrichtung relativ zu dem Pumpengehäuse der Pumpe 36 bewegt, insbesondere gedreht, wird. Während in dem Vorwärtsbetrieb das mittels der Pumpe 36 in dem Vorwärtsbetrieb geförderte Medium von dem Anschluss A1 zu dem Anschluss A2 strömt, strömt in dem Rückwärtsbetrieb das mittels der Pumpe 36 in dem Rückwärtsbetrieb geförderte Medium von dem Anschluss A2 zu dem Anschluss A1. Durch den Rückwärtsbetrieb wird mittels der Pumpe 36 das Medium aus der Parksperre 42, insbesondere aus dem Betätigungsraum 100, abgefördert beziehungsweise abgesaugt oder angesaugt. Ein an dem Schaltschieber anliegender Schaltdruck, welcher bei dem Auslegen der Parksperre 42 zur Bewegung des Schaltschiebers aus der Ausgangsstellung in die Schaltstellung geführt hat, bricht ein, wodurch der einfach auch als Schieber bezeichnete Schaltschieber in seine auch als Grundstellung bezeichnete Ausgangsstellung bewegt wird, insbesondere mittels einer von einem Federelement 134 bereitgesellten Federkraft. Durch Bewegen des Schaltschiebers aus der Ausgangsstellung in die Schaltstellung wird das insbesondere mechanische Federelement 134 beispielsweise gespannt, wodurch das Federelement 134 die Federkraft bereitstellt, mittels welcher der Schaltschieber aus der Schaltstellung zurück in die Ausgangsstellung bewegt wird. In der Ausgangsstellung ist über den Schaltschieber der auch als Kolbenraum bezeichnete Betätigungsraum 100 mit einem Tank 136 fluidisch verbunden, sodass das zunächst in dem Betätigungsraum 100 aufgenommene Medium über den Schaltschieber in den Tank 136 strömen und somit aus dem Betätigungsraum 100 herausströmen kann. In der Folge wird der Sperrkolben mittels des insbesondere mechanischen Federelements 104 aus der ausgelegten Stellung in die eingelegte Stellung bewegt, insbesondere verschoben, wodurch die Parksperre 42 eingelegt wird. Selbstverständlich wird der Hubmagnet zunächst bestromt beziehungsweise angesteuert, um dadurch das mittels der Federkraft des Federelements 104 bewirkte beziehungsweise bewirkbare Bewegen des Sperrkolbens aus der ausgelegten Stellung in die eingelegte Stellung zuzulassen. Hat der Sperrkolben seine eingelegte Stellung erreicht, so wird die Bestromung des Hubmagneten beendet beziehungsweise abgestellt, wodurch der Sperrkolben wieder verriegelt wird. Dieses Einlegen der Parksperre 42 ist vorzugsweise redundant, da das Verriegelungselement 108 sowohl mittels des Aktors 116 und somit elektrisch als auch mittels des Hydraulikzylinders 118 und somit hydraulisch bewirkt werden kann.

### Bezugszeichenliste

- 10: Antriebseinrichtung
- 12: elektrische Maschine
- 14: Getriebe
- 16: Schaltelement
- 18: Schaltelement
- 20: Kreislauf
- 22: Zweig
- 24: Teilzweig
- 26a, b: Ast
- 28: Teilzweig
- 30: Kühler
- 32: Umgehungsleitung
- 34: Zweig
- 35: Ventilelement
- 36: Pumpe
- 38: Elektromotor
- 40: Förderelement
- 42: Parksperre
- 44: Zweig
- 46: Ventilelement
- 48: Ventilelement
- 50: Gehäuse
- 52: Kolben
- 54: Kolbenstange
- 56: Arbeitskammer
- 58: Arbeitskammer
- 60: Doppelpfeil
- 62: Pfeil
- 64: Pfeil
- 66: Ventilelement
- 68: Kreislauf
- 70: Pumpe
- 72: Elektromotor
- 74: Förderelement
- 76: Ventilelement
- 78: Gehäuse
- 80: Kolben
- 82: Doppelpfeil
- 84: Kolbenstange
- 86: Arbeitskammer
- 88: Pfeil
- 90: Federelement
- 92: Pfeil
- 94: Hydraulikzylinder
- 96: Gehäuse
- 98: Kolben
- 100: Betätigungsraum
- 102: Pfeil
- 104: Federelement
- 106: Pfeil
- 108: Verriegelungselement
- 110: Ausnehmung
- 112: Ausnehmung
- 114: Federelement
- 116: Aktor
- 118: Hydraulikzylinder
- 120: Pfeil
- 122: Sumpf
- 124: Filter
- 125: Tank
- 126: Vorhalt
- 127: Pfeil
- 128: Zuleitung
- 130: Leitungselement
- 132: Pfeil
- 134: Federelement
- 136: Tank
- A: Abzweigstelle
- A1, A2: Anschluss

## Patentansprüche

1. Antriebseinrichtung (10) für ein Kraftfahrzeug, mit mindestens einer elektrischen Maschine (12), mit einem Getriebe (14), über welches das Kraftfahrzeug mittels der elektrischen Maschine (12) elektrisch antreibbar ist, mit wenigstens einem Schaltelement (16), mittels welchem durch Betätigen des Schaltelements (16) wenigstens ein Gang des Getriebes (14) zu schalten ist, mit wenigstens einem Kreislauf (20), welcher von einem Medium durchströmbar ist und einen ersten Zweig (22), welcher zum Kühlen und/oder Schmieren der elektrischen Maschine (12) und/oder des Getriebes (14) von dem Medium durchströmbar ist, und einen zweiten Zweig (34) aufweist, welcher zum Betätigen des Schaltelements (16) von dem Medium durchströmbar ist, und mit einer elektrischen Pumpe (36) zum Fördern des Mediums durch den Kreislauf (20), und mit einer Parksperre (42), wobei der Kreislauf einen dritten Zweig (44) aufweist, welcher zum Betätigen der Parksperre (42) von dem Medium durchströmbar ist, **dadurch gekennzeichnet, dass**:
- zum Fördern des Mediums von der Pumpe (36) hin zu dem jeweiligen Zweig (22, 34, 44) die Pumpe (36) in einem Vorwärtsbetrieb betreibbar ist, in welchem das mittels der Pumpe (36) in dem Vorwärtsbetrieb geförderte Medium von einem ersten Anschluss (A1) der Pumpe (36) zu einem zweiten Anschluss (A2) der Pumpe (36) strömt; und
- die Pumpe (36) in einem Rückwärtsbetrieb betreibbar ist, in welchem das mittels der Pumpe (36) in dem Rückwärtsbetrieb geförderte Medium von dem zweiten Anschluss (A2) zu dem ersten Anschluss (A1) strömt, wodurch das Medium zumindest aus einem Teil des dritten Zweigs (44) herausförderbar ist.

2. Antriebseinrichtung (10) nach Anspruch 1,
**gekennzeichnet durch**
ein Ventilelement (46), über welches der erste Zweig (22) und der zweite Zweig (34) mit dem mittels der Pumpe (36) geförderten Medium versorgbar sind, wobei das Ventilelement (46) umschaltbar ist zwischen:
- einem Kühlzustand, in welchem der erste Zweig (22) über das Ventilelement (46) fluidisch mit der Pumpe (36) verbunden und dadurch über das Ventilelement (46) mit dem mittels der Pumpe (36) geförderten Medium versorgbar ist, während der zweite Zweig (34) mittels des Ventilelements (46) fluidisch von der Pumpe (36) getrennt ist; und
- einem Betätigungszustand, in welchem der zweite Zweig (34) über das Ventilelement (46) fluidisch mit der Pumpe (36) verbunden und dadurch über das Ventilelement (46) mit dem mittels der Pumpe (36) geförderten Medium versorgbar ist, während der erste Zweig (22) mittels des Ventilelements (46) fluidisch von der Pumpe (36) getrennt ist.

3. Antriebseinrichtung (10) nach Anspruch 2,
**dadurch gekennzeichnet, dass**
zum Betätigen der Parksperre (42) das Ventilelement (46) in den Betätigungszustand geschaltet ist.

4. Antriebseinrichtung (10) nach Anspruch 2 oder 3,
**gekennzeichnet durch**
ein in dem zweiten Zweig (34) angeordnetes, zweites Ventilelement (48), welches umschaltbar ist zwischen:
- einem Einlegezustand, in welchem das Schaltelement (16) über das zweite Ventilelement (48) fluidisch mit dem ersten Ventilelement (46) verbunden und dadurch über die Ventilelemente (46, 48) mit dem mittels der Pumpe (36) geförderten Medium versorgbar ist, wodurch zum Einlegen des Gangs das Schaltelement (16) betätigbar ist; und
- einem Auslegezustand, in welchem das Schaltelement (16) über das zweite Ventilelement (48) fluidisch mit dem ersten Ventilelement (46) verbunden und dadurch über die Ventilelemente (46, 48) mit dem mittels der Pumpe (36) geförderten Medium versorgbar ist, wodurch zum Auslegen des Gangs das Schaltelement (16) betätigbar ist.

5. Antriebseinrichtung (10) nach einem der vorhergehenden Ansprüche,
**dadurch gekennzeichnet, dass**
das Schaltelement (16) ein formschlüssiges Schaltelement ist.

6. Antriebseinrichtung (10) nach einem der vorhergehenden Ansprüche,
**dadurch gekennzeichnet, dass**:
- das Getriebe (14) wenigstens ein zusätzlich zu dem Schaltelement (16) vorgesehenes, zweites Schaltelement (18) aufweist;
- die Antriebseinrichtung (10) einen zweiten Kreislauf (68) aufweist, welcher zum Betätigen des zweiten Schaltelements (18) von dem Medium durchströmbar ist; und
- die Antriebseinrichtung (10) eine zweite elektrische Pumpe (70) zum Fördern des Mediums durch den zweiten Kreislauf (68) aufweist.

7. Antriebseinrichtung (10) nach Anspruch 6,
**dadurch gekennzeichnet, dass**
das zweite Schaltelement (18) ein reibschlüssiges Schaltelement ist.

8. Antriebseinrichtung (10) nach Anspruch 6 oder 7,
**gekennzeichnet durch**
einen den Pumpen (36, 70) und den Kreisläufen (20, 68) gemeinsamen Sumpf (122), aus welchem das Medium mittels der Pumpen (36, 70) durch die Kreisläufe (20, 68) hindurchförderbar ist.

9. Kraftfahrzeug, mit einer Antriebseinrichtung (10) nach einem der vorhergehenden Ansprüche.

## Claims

1. Drive device (10) for a motor vehicle, comprising at least one electric machine (12), comprising a transmission (14), via which the motor vehicle can be electrically driven by means of the electric machine (12), comprising at least one shifting element (16), by means of which at least one gear of the transmission (14) is to be shifted by actuating the shifting element (16), comprising at least one circuit (20), through which a medium can flow and which has a first branch (22), through which the medium can flow in order to cool and/or lubricate the electric machine (12) and/or the transmission (14), and a second branch (34), through which the medium can flow in order to actuate the shifting element (16), and comprising an electric pump (36) for conveying the medium through the circuit (20), and comprising a parking lock (42), the circuit having a third branch (44), through which the medium can flow in order to actuate the parking lock (42), **characterized in that:**
- in order to convey the medium from the pump (36) to the relevant branch (22, 34, 44), the pump (36) can be operated in a forward mode, in which the medium conveyed by means of the pump (36) in the forward mode flows from a first connection (A1) of the pump (36) to a second connection (A2) of the pump (36); and
- the pump (36) can be operated in a reverse mode, in which the medium conveyed by means of the pump (36) in the reverse mode flows from the second connection (A2) to the first connection (A1), as a result of which the medium can be conveyed out of at least a portion of the third branch (44).

2. Drive device (10) according to claim 1,
**characterized by**
a valve element (46), via which the first branch (22) and the second branch (34) can be supplied with the medium conveyed by means of the pump (36), the valve element (46) being switchable between:
- a cooling state, in which the first branch (22) is fluidically connected to the pump (36) via the valve element (46) and can thus be supplied with the medium conveyed by means of the pump (36) via the valve element (46), while the second branch (34) is fluidically disconnected from the pump (36) by means of the valve element (46); and
- an actuating state, in which the second branch (34) is fluidically connected to the pump (36) via the valve element (46) and can thus be supplied with the medium conveyed by means of the pump (36) via the valve element (46), while the first branch (22) is fluidically disconnected from the pump (36) by means of the valve element (46).

3. Drive device (10) according to claim 2,
**characterized in that,**
in order to actuate the parking lock (42), the valve element (46) is switched into the actuating state.

4. Drive device (10) according to either claim 2 or claim 3,
**characterized by**
a second valve element (48) which is arranged in the second branch (34) and is switchable between:
- an engagement state, in which the shifting element (16) is fluidically connected to the first valve element (46) via the second valve element (48) and can thus be supplied with the medium conveyed by means of the pump (36) via the valve elements (46, 48), as a result of which the shifting element (16) can be actuated for engaging the gear; and
- a disengagement state, in which the shifting element (16) is fluidically connected to the first valve element (46) via the second valve element (48) and can thus be supplied with the medium conveyed by means of the pump (36) via the valve elements (46, 48), as a result of which the shifting element (16) can be actuated for disengaging the gear.

5. Drive device (10) according to any of the preceding claims
**characterized in that**
the shifting element (16) is a form-fitting shifting element.

6. Drive device (10) according to any of the preceding claims,
**characterized in that:**
- the transmission (14) has at least one second shifting element (18) provided in addition to the shifting element (16);
- the drive device (10) has a second circuit (68), through which the medium can flow in order to actuate the second shifting element (18); and
- the drive device (10) has a second electric pump (70) for conveying the medium through the second circuit (68).

7. Drive device (10) according to claim 6,
**characterized in that**
the second shifting element (18) is a frictional shifting element.

8. Drive device (10) according to either claim 6 or claim 7,
**characterized by**
a sump (122) which is common to the pumps (36, 70) and the circuits (20, 68) and from which the medium can be conveyed through the circuits (20, 68) by means of the pumps (36, 70).

9. Motor vehicle comprising a drive device (10) according to any of the preceding claims.

## Revendications

1. Dispositif d'entraînement (10) pour un véhicule automobile, comportant au moins une machine électrique (12), comportant une transmission (14) par l'intermédiaire de laquelle le véhicule automobile peut être entraîné électriquement à l'aide de la machine électrique (12), comportant au moins un élément de commutation (16) à l'aide duquel au moins un rapport de la transmission (14) est à commuter par actionnement de l'élément de commutation (16), comportant au moins un circuit (20) qui peut être traversé par un milieu et présente une première branche (22), laquelle peut être traversée par le milieu pour le refroidissement et/ou la lubrification de la machine électrique (12) et/ou de la transmission (14), et une deuxième branche (34), laquelle peut être traversée par le milieu pour l'actionnement de l'élément de commutation (16), et comportant une pompe électrique (36) permettant de transporter le milieu à travers le circuit (20), et comportant un frein de stationnement (42), dans lequel le circuit présente une troisième branche (44), laquelle peut être traversée par le milieu pour l'actionnement du frein de stationnement (42), **caractérisé en ce que** :
- pour le transport du milieu de la pompe (36) jusqu'à la branche (22, 34, 44) respective, la pompe (36) peut fonctionner dans un mode de fonctionnement vers l'avant, dans lequel le milieu transporté à l'aide de la pompe (36) dans le mode de fonctionnement vers l'avant s'écoule d'un premier raccord (A1) de la pompe (36) vers un second raccord (A2) de la pompe (36) ; et
- la pompe (36) peut fonctionner dans un mode de fonctionnement vers l'arrière, dans lequel le milieu transporté à l'aide de la pompe (36) dans le mode de fonctionnement vers l'arrière s'écoule du second raccord (A2) vers le premier raccord (A1), moyennant quoi le milieu peut être évacué d'au moins une partie de la troisième branche (44).

2. Dispositif d'entraînement (10) selon la revendication 1,
**caractérisé par**
un élément formant soupape (46), par l'intermédiaire duquel la première branche (22) et la deuxième branche (34) peuvent être alimentées en milieu transporté à l'aide de la pompe (36), dans lequel l'élément formant soupape (46) peut être commuté entre :
- un état de refroidissement, dans lequel la première branche (22) est reliée fluidiquement à la pompe (36) par l'intermédiaire de l'élément formant soupape (46) et peut ainsi être alimentée en milieu transporté à l'aide de la pompe (36) par l'intermédiaire de l'élément formant soupape (46), tandis que la deuxième branche (34) est séparée fluidiquement de la pompe (36) à l'aide de l'élément formant soupape (46) ; et
- un état d'actionnement, dans lequel la deuxième branche (34) est reliée fluidiquement à la pompe (36) par l'intermédiaire de l'élément formant soupape (46) et peut ainsi être alimentée en milieu transporté à l'aide de la pompe (36) par l'intermédiaire de l'élément formant soupape (46), tandis que la première branche (22) est séparée fluidiquement de la pompe (36) à l'aide de l'élément formant soupape (46).

3. Dispositif d'entraînement (10) selon la revendication 2,
**caractérisé en ce que**
l'élément formant soupape (46) est commuté dans l'état d'actionnement pour l'actionnement du frein de stationnement (42).

4. Dispositif d'entraînement (10) selon la revendication 2 ou 3,
**caractérisé par**
un second élément formant soupape (48) disposé dans la deuxième branche (34), lequel peut être commuté entre :
- un état d'engagement, dans lequel l'élément de commutation (16) est relié fluidiquement au premier élément formant soupape (46) par l'intermédiaire du second élément formant soupape (48) et peut ainsi être alimenté en milieu transporté à l'aide de la pompe (36) par l'intermédiaire des éléments formant soupape (46, 48), moyennant quoi l'élément de commutation (16) peut être actionné pour l'engagement du rapport ; et
- un état de désengagement, dans lequel l'élément de commutation (16) est relié fluidiquement au premier élément formant soupape (46) par l'intermédiaire du second élément formant soupape (48) et peut ainsi être alimenté en milieu transporté à l'aide de la pompe (36) par l'intermédiaire des éléments formant soupape (46, 48), moyennant quoi l'élément de commutation (16) peut être actionné pour le désengagement du rapport.

5. Dispositif d'entraînement (10) selon l'une des revendications précédentes,
**caractérisé en ce que**
l'élément de commutation (16) est un élément de commutation à complémentarité de forme.

6. Dispositif d'entraînement (10) selon l'une des revendications précédentes, **caractérisé en ce que** :
- la transmission (14) présente au moins un second élément de commutation (18) prévu en plus de l'élément de commutation (16) ;
- le dispositif d'entraînement (10) présente un second circuit (68) qui peut être traversé par le milieu pour l'actionnement du second élément de commutation (18) ; et
- le dispositif d'entraînement (10) présente une seconde pompe électrique (70) permettant de transporter le milieu à travers le second circuit (68).

7. Dispositif d'entraînement (10) selon la revendication 6,
**caractérisé en ce que**
le second élément de commutation (18) est un élément de commutation à friction.

8. Dispositif d'entraînement (10) selon la revendication 6 ou 7,
**caractérisé par**
un carter (122) commun aux pompes (36, 70) et aux circuits (20, 68), à partir duquel le milieu peut être transporté à travers les circuits (20, 68) à l'aide des pompes (36, 70).

9. Véhicule automobile, comportant un dispositif d'entraînement (10) selon l'une des revendications précédentes.
